(19) **Europäisches Patentamt / European Patent Office / Office européen des brevets**

(11) **EP 4 525 529 A1**

(12) **EUROPEAN PATENT APPLICATION**
published in accordance with Art. 153(4) EPC

(43) Date of publication:
**19.03.2025 Bulletin 2025/12**

(21) Application number: **23819052.4**

(22) Date of filing: **05.06.2023**

(51) International Patent Classification (IPC):
**H04W 52/18** (2009.01)

(52) Cooperative Patent Classification (CPC):
**H04W 52/18**

(86) International application number:
**PCT/CN2023/098239**

(87) International publication number:
**WO 2023/236887 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.06.2022 CN 202210653604**
**03.08.2022 CN 202210926270**

(71) Applicant: **Huawei Technologies Co., Ltd.**
**Shenzhen, Guangdong 518129 (CN)**

(72) Inventors:
• **WANG, Bichai**
**Shenzhen, Guangdong 518129 (CN)**
• **LI, Xueru**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHOD AND APPARATUS**

(57) This application relates to a communication method and apparatus. A sending device determines a first parameter; and sequentially sends one or more UWB frames to a receiving device on M channels in first duration based on the first parameter. The first parameter is a transmission parameter of the sending device on the M channels, M is an integer greater than or equal to 2, and the first duration is less than or equal to 1 millisecond. In embodiments of this application, an original channel is replaced with a plurality of channels. After the plurality of channels are used, duration of each channel is reduced compared with duration of an existing channel, so that maximum transmit power on each channel is increased compared with maximum transmit power on the existing channel.

FIG. 4

**Description**

**CROSS-REFERENCE TO RELATED APPLICATIONS**

This application claims priority to Chinese Patent Application No. 202210653604.0, filed with the China National Intellectual Property Administration on June 9, 2022 and entitled "UWB TRANSMISSION METHOD", which is incorporated herein by reference in its entirety. This application claims priority to Chinese Patent Application No. 202210926270.X, filed with the China National Intellectual Property Administration on August 3, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In an ultra-wideband (ultra-wideband, UWB) technology, high-precision positioning or data transmission can be implemented by sending nanosecond-level short pulses. Based on a requirement of UWB regulations, a UWB device needs to occupy at least a 500-MHz channel bandwidth, and an average power spectral density (power spectral density, PSD) in each 1-ms period does not exceed -41.3 dBm/MHz. Therefore, at the 500-MHz channel bandwidth, total transmit energy in each 1-ms period cannot exceed 37 nJ. If a time of continuous transmission from a sending device to a receiving device exceeds 1 ms, it means that transmit power of the sending device cannot exceed -14.3 dBm.

Under the constraint of the foregoing transmit power, it is clear that a communication distance of the UWB device is limited, that is, a coverage area of the UWB device is limited.

**SUMMARY**

Embodiments of this application provide a communication method and apparatus, to increase a coverage area of a UWB device.

According to a first aspect, a communication method is provided. The method may be performed by a sending device, may be performed by another device including a function of the sending device, or may be performed by a chip system or another functional module. The chip system or the functional module can implement the function of the sending device. The chip system or the functional module is, for example, disposed in the sending device. The sending device is, for example, a terminal device or a network device. Optionally, the sending device has a UWB function. The method includes: determining a first parameter; and sequentially sending one or more UWB frames to a receiving device on M channels in first duration based on the first parameter, where the first parameter is a transmission parameter of the sending device on the M channels, M is an integer greater than or equal to 2, and the first duration is less than or equal to 1 millisecond (ms).

In this embodiment of this application, the sending device may sequentially send UWB frames to the receiving device on a plurality of channels in the first duration less than or equal to 1 ms. This is equivalent to replacing an original channel with the plurality of channels. After the plurality of channels are used, duration of each channel is reduced compared with duration of an existing channel, so that maximum transmit power on each channel is increased compared with maximum transmit power on the existing channel. For example, in a case of a fixed amount of channel energy, if the original channel is replaced with the M channels, maximum transmit power on one of the M channels may be M times maximum transmit power on the original channel. It may be learned that according to the technical solution in this embodiment of this application, transmit power for a UWB signal can be effectively increased, thereby increasing a coverage area of a UWB device.

In an optional implementation, before the sending one or more UWB frames, the method further includes: sending first configuration information to the receiving device, where the first configuration information is used to configure the first parameter. The receiving device obtains the first parameter, and then can receive the one or more UWB frames on the M channels based on the first parameter. For example, the first parameter may be configured by the sending device for the receiving device. Alternatively, the first parameter may be configured by the receiving device for the sending device. For example, the first configuration information is sent by the receiving device to the sending device, so that the sending device can accordingly determine the first parameter. Alternatively, the first parameter may be determined by the sending device and the receiving device through negotiation. Alternatively, the first parameter may be preset, for example, predefined by using a protocol or the like.

In an optional implementation, the first configuration information is included in a PHR or an MHR of a UWB frame used to carry the first configuration information. The first configuration information may be included in a UWB frame, and the first configuration information may be included in a PHR or an MHR of the UWB frame, or may be included in another field of the UWB frame. This is not specifically limited.

In an optional implementation, the first parameter includes one or more of the following: a first cycle, an arrangement sequence of or a frequency hopping pattern followed by the M channels in the first duration, duration of each of the M channels in the first duration or a duration ratio of each of the M channels to the first duration, a time interval between two channels with adjacent transmission times in the M channels, or a time offset between a frame carrying the first configuration information and the 1st channel in the M channels, where duration of the first cycle is greater than or equal to the first duration. For example, the first cycle is a cycle of the M channels or a cycle of the first duration. The time offset between the frame carrying the first configuration information and the 1st channel in the M channels is, for example, a time offset between a start time domain location of the frame and a start time domain location of the 1st channel, a time offset between an end time domain location of the frame and an end time domain location of the 1st channel, a time offset between an end time domain location of the frame and a start time domain location of the 1st channel, or the like. The frame carrying the first configuration information is, for example, a UWB frame, or may be another frame supported by a communication protocol, for example, a Bluetooth frame or the like.

In an optional implementation, the method further includes: sending an activation indication to the receiving device, where the activation indication indicates to activate the first parameter. For example, the sending device sends the first configuration information to the receiving device, but the first configuration information is used to configure the first parameter and is not used to activate the first parameter. In this case, the sending device may further send the activation indication to the receiving device, to activate the first parameter. In this manner, the first configuration information may be semi-statically configured. That is, the first parameter may be used for a plurality of times (or used in a relatively long time) after being configured, and the first parameter does not need to be reconfigured each time the first parameter is used. This can simplify a configuration process.

In an optional implementation, the activation indication further includes first indication information, and the first indication information indicates a time offset between a frame carrying the activation indication and the 1st channel in the M channels. If the sending device further needs to send the activation indication to the receiving device, the activation indication may further indicate the time offset between the frame carrying the activation indication and the 1st channel, so that the receiving device can determine a time domain location of the 1st channel after receiving the activation indication. Optionally, if the activation indication includes the first indication information, the first parameter may not include the time offset between the frame carrying the first configuration information and the 1st channel in the M channels.

In an optional implementation, the activation indication is included in a PHR or an MHR of a UWB frame used to carry the activation indication. The frame carrying the activation indication is, for example, a UWB frame, or may be another frame supported by a communication protocol, for example, a Bluetooth frame or the like. A location of the activation indication in the frame is not limited.

In an optional implementation, the first parameter includes one or more of the following: duration of each of the M channels in the first duration or a duration ratio of each of the M channels to the first duration, a time offset between a frame carrying the first configuration information and each of the M channels, or valid duration information of the first parameter. The first parameter may be implemented in different forms.

In an optional implementation, the first parameter includes one or more of the following: a first cycle, a second cycle, information about N first time windows in the first cycle, or information about K second time windows in the second cycle, where duration of the first cycle is greater than or equal to the first duration, duration of the second cycle is greater than or equal to the duration of the first cycle, the N first time windows correspond to the M channels, N is a positive integer less than or equal to M, and K is an integer greater than or equal to 1. This implementation of the first parameter may be considered as an energy saving manner. For example, in a time other than the first time window and the second time window, the receiving device may not receive (or detect) a UWB frame or may enter a sleep state, to reduce power consumption.

In an optional implementation, information about one of the N first time windows includes (or indicates) a start time domain location and/or duration information of the first time window, includes (or indicates) an end time domain location and/or duration information of the first time window, or includes (or indicates) a start time domain location and/or an end time domain of the first time window.

In an optional implementation, information about one of the K second time windows includes one or more of the following: start time domain location information of the second time window, duration information of the second time window, or a time offset between a nearest first time window and a start time domain location and/or an end time domain location of the second time window. The time domain location of the second time window can be determined based on the information about the second time window.

In an optional implementation, the one or more UWB frames include a first UWB frame, the first UWB frame further includes second indication information, and the second indication information indicates whether there is a to-be-transmitted UWB frame. After receiving the first UWB frame, the receiving device may determine, based on the second indication information, whether there is a to-be-transmitted UWB frame. If there is no to-be-transmitted UWB frame, the receiving device may enter a state of not receiving (or not detecting) a UWB frame or enter a sleep state, to reduce power consumption.

In an optional implementation, third indication information is sent in the second time window, where the third indication information indicates whether to receive a UWB frame in next one or more first time windows, or the third indication information indicates to receive a UWB frame in next one or more first time windows. Energy saving can be implemented by using the third indication information. For example, if the third indication information indicates not to receive a UWB frame in next one or more first time windows, or the sending device does not send the third indication information, in the one or more first time windows, the receiving device may enter the state of not receiving (or not detecting) a UWB frame or enter the sleep state, to reduce power consumption.

In an optional implementation, the method further includes: sending a deactivation indication to the receiving device, where the deactivation indication indicates to deactivate the first parameter. When use of the first parameter is stopped, the sending device may indicate, by using the deactivation indication, to deactivate the first parameter. After receiving the deactivation indication, the receiving device may stop using the first parameter. This is equivalent to that the transmission mode provided in this embodiment of this application may be activated or deactivated based on a situation, and is flexible.

In an optional implementation, before the sending one or more UWB frames, the method further includes: sending first capability information to the receiving device, where the first capability information indicates an identifier of a channel supported by the sending device and/or channel switching capability information supported by the sending device. For example, if the receiving device sets the first parameter, the receiving device may set the first parameter based on the capability information of the sending device and/or capability information of the receiving device.

In an optional implementation, before the sending one or more UWB frames, the method further includes: receiving second capability information from the receiving device, where the second capability information indicates an identifier of a channel supported by the receiving device and/or channel switching capability information supported by the receiving device. For example, if the sending device sets the first parameter, the sending device may set the first parameter based on capability information of the sending device and/or the capability information of the receiving device.

In an optional implementation, maximum transmit power of the sending device on a first channel in the M channels is determined based on duration of the first channel in the first duration, and the first channel is any one of the M channels. The duration of the first channel is reduced compared with duration of an existing channel, so that the maximum transmit power on the first channel is increased compared with maximum transmit power on the existing channel. Therefore, transmit power for a UWB signal can be effectively increased, thereby increasing a coverage area of a UWB device.

In an optional implementation, an average power spectral density corresponding to the maximum transmit power in 1 millisecond is less than or equal to a first threshold, and the first threshold is an upper limit of an average power spectral density, in 1 millisecond, of a channel carrying the UWB frame. That is, in this embodiment of this application, the maximum transmit power on the first channel also meets a constraint of UWB PSD regulations, and meets a transmission requirement.

In an optional implementation, the maximum transmit power meets the following relationship: $A + 10 * log_{10}$ $(BW/1MHz) + 10 * log_{10}(1ms/T)$, where $A$ represents the first threshold, $T$ represents the duration of the first channel, and $BW$ represents a bandwidth of the first channel.

In an optional implementation, any one of the one or more UWB frames is sent only on one of the M channels. That is, the sending device does not send one UWB frame on a plurality of channels, but sends the UWB frame only on one channel, to facilitate synchronization of the receiving device.

According to a second aspect, another communication method is provided. The method may be performed by a receiving device, may be performed by another device including a function of the receiving device, or may be performed by a chip system or another functional module. The chip system or the functional module can implement the function of the receiving device. The chip system or the functional module is, for example, disposed in the receiving device. The receiving device is, for example, a terminal device or a network device. Optionally, the receiving device has a UWB function. The method includes: determining a first parameter; and sequentially receiving one or more UWB frames from a sending device on M channels in first duration based on the first parameter, where the first parameter is a transmission parameter of the sending device on the M channels, M is an integer greater than or equal to 2, and the first duration is less than or equal to 1 millisecond.

In an optional implementation, before the receiving one or more UWB frames, the method further includes: receiving first configuration information from the sending device, where the first configuration information is used to configure the first parameter.

In an optional implementation, the first configuration information is included in a PHR or an MHR of a UWB frame used to carry the first configuration information.

In an optional implementation, the first parameter includes one or more of the following: a first cycle, an arrangement sequence of or a frequency hopping pattern followed by the M channels in the first duration, duration of each of the M channels in the first duration or a duration ratio of each of the M channels to the first duration, a time interval between two channels with adjacent transmission times in the M channels, or a time offset between a frame carrying the first configuration information and the $1^{st}$ channel in the M channels, where duration of the first cycle is greater than or equal to the first duration.

In an optional implementation, the method further includes: receiving an activation indication from the sending device, where the activation indication indicates to activate the first parameter.

In an optional implementation, the activation indication further includes first indication information, and the first indication information indicates a time offset between a frame carrying the activation indication and the $1^{st}$ channel in the M channels.

In an optional implementation, the activation indication is included in a PHR or an MHR of a UWB frame used to carry the activation indication.

In an optional implementation, the first parameter includes one or more of the following: duration of each of the M channels in the first duration or a duration ratio of each of the M channels to the first duration, a time offset between a frame carrying the first configuration information and each of the M channels, or valid duration information of the first parameter.

In an optional implementation, the first parameter includes one or more of the following: a first cycle, a second cycle, information about N first time windows in the first cycle, or information about K second time windows in the second cycle, where duration of the first cycle is greater than or equal to the first duration, duration of the second cycle is greater than or equal to the duration of the first cycle, the N first time windows correspond to the M channels, N is a positive integer less than or equal to M, and K is an integer greater than or equal to 1.

In an optional implementation, information about one of the N first time windows includes a start time domain location and/or duration information of the first time window, includes an end time domain location and/or duration information of the first time window, or includes a start time domain location and/or an end time domain location of the first time window.

In an optional implementation, information about one of the K second time windows includes one or more of the following: start time domain location information of the second time window, duration information of the second time window, or a time offset between a nearest first time window and a start time domain location and/or an end time domain location of the second time window.

In an optional implementation, the one or more UWB frames include a first UWB frame, the first UWB frame further includes second indication information, and the second indication information indicates whether there is a to-be-transmitted UWB frame.

In an optional implementation, third indication information is detected in the second time window, where the third indication information indicates whether the receiving device needs to receive a UWB frame in next one or more first time windows, or the third indication information indicates the receiving device to receive a UWB frame in next one or more first time windows.

In an optional implementation, the method further includes: if the second indication information indicates that there is no to-be-transmitted UWB frame, entering a sleep state or no longer receiving a UWB frame in the second cycle.

In an optional implementation, the method further includes: if the second indication information indicates that there is a to-be-transmitted UWB frame, and the first UWB frame is a last UWB frame in a last first time window in the M first time windows, starting a first timer, to receive a UWB frame in the $1^{st}$ first time window in a next first cycle, where no UWB frame from the sending device is received during running of the first timer. If the first UWB frame is the last UWB frame in the last time window, it may be learned, based on the second indication information, that the receiving device further needs to receive a UWB frame in the $1^{st}$ time window in M first time windows in the next first cycle. Therefore, the receiving device may start the first timer, to wait for arrival of the $1^{st}$ time window in the M first time windows in the next first cycle. In addition, to reduce power consumption of the receiving device, the receiving device may not receive a UWB frame or enter a sleep state during running of the first timer.

In an optional implementation, the method further includes: receiving a deactivation indication from the sending device, where the deactivation indication indicates to deactivate the first parameter.

In an optional implementation, the method further includes: receiving first capability information from the sending device, where the first capability information indicates an identifier of a channel supported by the sending device and/or channel switching capability information supported by the sending device.

In an optional implementation, the method further includes: sending second capability information to the sending device, where the second capability information indicates an identifier of a channel supported by the receiving device and/or channel switching capability information supported by the receiving device.

In an optional implementation, any one of the one or more UWB frames is received only on one of the M channels.

For technical effects brought by the second aspect or the optional implementations, refer to the descriptions of the technical effects of the first aspect or the corresponding implementations.

According to a third aspect, still another communication method is provided. The method may be performed by a sending device, may be performed by another device including a function of the sending device, or may be performed by a chip system or another functional module. The chip system or the functional module can implement the function of the sending device. The chip system or the functional module is, for example, disposed in the sending device. The sending device is, for example, a terminal device or a network device. Optionally, the sending device has a UWB function. The method includes: determining a first parameter; and sending a plurality of UWB frames to a receiving device in M time domain units based on the first parameter, where the first parameter is a transmission parameter of the sending device in the M time domain units, duration of each of the M time domain units is less than or equal to first duration, M is an integer greater than or equal to 2, and the first duration is less than or equal to 1 millisecond.

In this embodiment of this application, the sending device may send the UWB frames to the receiving device in the M time domain units. This is equivalent to replacing an original continuous time with a plurality of time domain units. After the plurality of time domain units are used, duration of each time domain unit is reduced compared with an existing continuous time, so that maximum transmit power of the sending device in each time domain unit is increased compared with existing maximum transmit power in the continuous time. For example, in a case of a fixed amount of channel energy, if the original continuous time is replaced with the M time domain units, maximum transmit power of the sending device in one of the M time domain units may be M times original transmit power in the continuous time. It may be learned that according to the technical solution in this embodiment of this application, transmit power for a UWB signal can be effectively increased, thereby increasing a coverage area of a UWB device.

In an optional implementation, the method further includes: sending first indication information to the receiving device, where the first indication information indicates duration information of a synchronization field included in each of the plurality of UWB frames, and duration information of synchronization fields included in at least two of the plurality of UWB frames is different. For example, if a quantity of the one or more UWB frames is greater than 1, in the one or more UWB frames, duration of synchronization fields included in at least two UWB frames may be different, or quantities of repetition times of pilot symbols may be different. For example, duration of a synchronization field included in the 1st UWB frame (which may be a UWB frame first sent by the sending device in the one or more UWB frames or a UWB frame first generated by the sending device in the one or more UWB frames) in the one or more UWB frames may be long, and the receiving device may perform accurate processing based on the synchronization field, for example, perform accurate ranging, synchronization, channel estimation, or the like. Duration of a synchronization field included in a UWB frame other than the 1st UWB frame in the one or more UWB frames may be short. In a sending time of the another UWB frame, it may be considered that a synchronization error is small, or it may be considered that a channel environment basically remains unchanged, or the like. Therefore, the duration of the synchronization field may be reduced, to reduce overheads of the synchronization field. The receiving device can correctly detect the UWB frame by using the first indication information.

In an optional implementation, the first indication information further indicates one or more of the following information of each of the plurality of UWB frames: whether a PHR is included, a physical payload size, or a modulation and coding scheme. Different UWB frames may have different structures. For example, some UWB frames may include no physical payload. Therefore, the first indication information can indicate content included in the UWB frame, or indicate content not included in the UWB frame, so that the receiving device can learn of a structure of the UWB frame, to implement correct detection.

In an optional implementation, before the sending a plurality of UWB frames, the method further includes: sending first configuration information to the receiving device, where the first configuration information is used to configure the first parameter.

In an optional implementation, the first configuration information is included in a PHR or an MHR of a UWB frame used to carry the first configuration information.

In an optional implementation, the first parameter includes one or more of the following: the duration of each of the M time domain units or a duration ratio of each of the M time domain units to the first duration, a time offset between a frame carrying the first configuration information and a start time domain location of the 1st time domain unit in the M time domain units, valid duration information of the first parameter, or a time range for the receiving device to send acknowledgment information.

In an optional implementation, the first parameter includes one or more of the following: a first cycle, a second cycle, information about a first time window in the first cycle, or information about K second time windows in the second cycle, where duration of the first cycle is greater than or equal to 1 millisecond, duration of the second cycle is greater than or equal to the duration of the first cycle, the first time window corresponds to one of the M time domain units, and K is an integer greater than or equal to 1.

In an optional implementation, the information about the first time window includes a start time domain location and/or duration information of the first time window.

In an optional implementation, information about one of the K second time windows includes one or more of the following: start time domain location information of the second time window, duration information of the second time window, or a time offset between a nearest first time window and a start time domain location and/or an end time domain location of the second time window.

In an optional implementation, the plurality of UWB frames include a first UWB frame, the first UWB frame further includes second indication information, and the second indication information indicates whether there is a to-be-transmitted UWB frame.

In an optional implementation, third indication information is sent in the second time window, where the third indication information indicates whether a UWB frame needs to be received in next one or more first time windows, or the third indication information indicates to receive a UWB frame in next one or more first time windows.

In an optional implementation, the method further includes: sending a deactivation indication to the receiving device, where the deactivation indication indicates to deactivate the first parameter.

In an optional implementation, maximum transmit power of the sending device on a first channel in a first time domain unit in the M time domain units is determined based on duration of the first time domain unit, and the first time domain unit is any one of the M time domain units.

In an optional implementation, the maximum transmit power meets the following relationship: $A + 10 * log_{10}(BW/1MHz) + 10 * log_{10}(1ms/T)$, where A represents a first power spectral density threshold, T represents the duration of the first time domain unit, and BW represents a bandwidth of the sending device in the first time domain unit.

For technical effects brought by some optional implementations of the third aspect, refer to the descriptions of the technical effects of the corresponding implementations of the first aspect.

According to a fourth aspect, yet another communication method is provided. The method may be performed by a receiving device, may be performed by another device including a function of the receiving device, or may be performed by a chip system or another functional module. The chip system or the functional module can implement the function of the receiving device. The chip system or the functional module is, for example, disposed in the receiving device. The receiving device is, for example, a terminal device or a network device. Optionally, the receiving device has a UWB function. The method includes: determining a first parameter; and receiving a plurality of UWB frames from a sending device in M time domain units based on the first parameter, where the first parameter is a transmission parameter of the sending device in the M time domain units, duration of each of the M time domain units is less than or equal to first duration, M is an integer greater than or equal to 2, and the first duration is less than or equal to 1 millisecond.

In an optional implementation, the method further includes: receiving first indication information from the sending device, where the first indication information indicates duration information of a synchronization field included in each of the plurality of UWB frames, and duration information of synchronization fields included in at least two of the plurality of UWB frames is different.

In an optional implementation, the first indication information further indicates one or more of the following information of each of the plurality of UWB frames: whether a physical header PHR is included, a physical payload size, or a modulation and coding scheme.

In an optional implementation, before the receiving a plurality of UWB frames, the method further includes: receiving first configuration information from the sending device, where the first configuration information is used to configure the first parameter.

In an optional implementation, the first configuration information is included in a PHR or an MHR of a UWB frame used to carry the first configuration information.

In an optional implementation, the first parameter includes one or more of the following: the duration of each of the M time domain units or a duration ratio of each of the M time domain units to the first duration, a time offset between a frame carrying the first configuration information and a start time domain location of the 1st time domain unit in the M time domain units, valid duration information of the first parameter, or a time range for the receiving device to send acknowledgment information.

In an optional implementation, the first parameter includes one or more of the following: a first cycle, a second cycle, information about a first time window in the first cycle, or information about K second time windows in the second cycle, where duration of the first cycle is greater than or equal to 1 millisecond, duration of the second cycle is greater than or equal to the duration of the first cycle, the first time window corresponds to one of the M time domain units, and K is an integer greater than or equal to 1.

In an optional implementation, the information about the first time window includes a start time domain location and/or duration information of the first time window.

In an optional implementation, information about one of the K second time windows includes one or more of the following: start time domain location information of the second time window, duration information of the second time window, or a time offset between a nearest first time window and a start time domain location and/or an end time domain location of the second time window.

In an optional implementation, the plurality of UWB frames include a first UWB frame, the first UWB frame further includes second indication information, and the second indication information indicates whether there is a to-be-transmitted UWB frame.

In an optional implementation, the method further includes: if the second indication information indicates that there is no to-be-transmitted UWB frame, entering a sleep state or no longer receiving a UWB frame in the second cycle.

In an optional implementation, third indication information is received in the second time window, where the third indication information indicates whether a UWB frame needs to be received in next one or more first time windows, or the third indication information indicates to receive a UWB frame in next one or more first time windows.

In an optional implementation, the method further includes: receiving a deactivation indication from the sending device, where the deactivation indication indicates to deactivate the first parameter.

In an optional implementation, maximum transmit power of the sending device on a first channel in a first time domain unit in the M time domain units is determined based on duration of the first time domain unit, and the first time domain unit is any one of the M time domain units.

In an optional implementation, the maximum transmit power meets the following relationship: $A + 10 * log_{10}(BW/1MHz) + 10 * log_{10}(1ms/T)$, where A represents a first power spectral density threshold, T represents the duration of the first time domain unit, and BW represents a bandwidth of the sending device in the first time domain unit.

For technical effects brought by the fourth aspect or the optional implementations of the fourth aspect, refer to the corresponding descriptions of any one of the foregoing aspects.

According to a fifth aspect, a communication apparatus is provided. The communication apparatus may be the sending device according to the first aspect, a communication device including the sending device, or a functional module in the sending device, for example, a baseband apparatus, a chip system, or the like. Alternatively, the communication apparatus may be the sending device according to the third aspect, a communication device including the sending device, or a functional module in the sending device, for example, a baseband apparatus, a chip system, or the like. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

The processing unit is configured to determine a first parameter; and the transceiver unit (or the sending unit) is configured to sequentially send one or more UWB frames to a receiving device on M channels in first duration based on the first parameter, where the first parameter is a transmission parameter of the sending device on the M channels, M is an integer greater than or equal to 2, and the first duration is less than or equal to 1 millisecond.

Alternatively, the processing unit is configured to determine a first parameter; and the transceiver unit (or the sending unit) is configured to send a plurality of UWB frames to a receiving device in M time domain units based on the first parameter, where the first parameter is a transmission parameter of the sending device in the M time domain units, duration of each of the M time domain units is less than or equal to first duration, M is an integer greater than or equal to 2, and the first duration is less than or equal to 1 millisecond.

In an optional implementation, the communication apparatus further includes a storage unit (sometimes also referred to as a storage module). The processing unit is configured to be coupled to the storage unit, and execute a program or instructions in the storage unit, to enable the communication apparatus to perform a function of the sending device according to the first aspect and/or the third aspect.

According to a sixth aspect, another communication apparatus is provided. The communication apparatus may be the receiving device according to the second aspect, a communication device including the receiving device, or a functional module in the receiving device, for example, a baseband apparatus, a chip system, or the like. Alternatively, the communication apparatus may be the receiving device according to the fourth aspect, a communication device including the receiving device, or a functional module in the receiving device, for example, a baseband apparatus, a chip system, or the like. The communication apparatus includes a processing unit (sometimes also referred to as a processing module) and a transceiver unit (sometimes also referred to as a transceiver module). For descriptions of the transceiver unit, refer to the fourth aspect.

The processing unit is configured to determine a first parameter; and the transceiver unit (or the receiving unit) is configured to sequentially receive one or more UWB frames from a sending device on M channels in first duration based on the first parameter, where the first parameter is a transmission parameter of the sending device on the M channels, M is an integer greater than or equal to 2, and the first duration is less than or equal to 1 millisecond.

Alternatively, the processing unit is configured to determine a first parameter; and the transceiver unit (or the receiving unit) is configured to receive a plurality of UWB frames from a sending device in M time domain units based on the first parameter, where the first parameter is a transmission parameter of the sending device in the M time domain units, duration of each of the M time domain units is less than or equal to first duration, M is an integer greater than or equal to 2, and the first duration is less than or equal to 1 millisecond.

In an optional implementation, the communication apparatus further includes a storage unit (sometimes also referred to as a storage module). The processing unit is configured to be coupled to the storage unit, and execute a program or instructions in the storage unit, to enable the communication apparatus to perform a function of the receiving device according to the first aspect and/or the third aspect.

According to a seventh aspect, a communication apparatus is provided. The communication apparatus may be a sending device or a chip or a chip system used in a sending device. Alternatively, the communication apparatus may be a receiving device or a chip or a chip system used in a receiving device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the sending device or the receiving device according to the foregoing aspects.

According to an eighth aspect, a communication system is provided, and includes a sending device and a receiving device. The sending device is configured to perform the communication method according to the first aspect and/or the third aspect, and the receiving device is configured to perform the communication method according to the second aspect and/or the fourth aspect.

According to a ninth aspect, a computer-readable storage medium is provided. The computer-readable storage medium is configured to store a computer program or instructions. When the computer program or the instructions are run, the method performed by the sending device or the receiving device according to the foregoing aspects is implemented.

According to a tenth aspect, a computer program product including instructions is provided. When the computer program product is run on a computer, the methods according to the foregoing aspects are implemented.

According to an eleventh aspect, a chip system is provided, and includes a processor and an interface. The processor is configured to invoke instructions from the interface and run the instructions, to enable the chip system to implement the methods according to the foregoing aspects.

**BRIEF DESCRIPTION OF DRAWINGS**

FIG. 1 is a diagram of a pulse waveform sent by a UWB device;
FIG. 2 is a diagram of limited transmit power of a UWB device;
FIG. 3 is a diagram of an application scenario according to an embodiment of this application;
FIG. 4 is a flowchart of a communication method according to an embodiment of this application;
FIG. 5A and FIG. 5B are two diagrams in which a sending device sends a UWB frame through a channel according to an embodiment of this application;
FIG. 6A to FIG. 6D are several diagrams of content indicated by a first parameter according to an embodiment of this application;
FIG. 7 is a diagram of a working mechanism of second indication information according to an embodiment of this application;
FIG. 8 is a flowchart of another communication method according to an embodiment of this application;
FIG. 9 is a diagram of content indicated by a first parameter according to an embodiment of this application;
FIG. 10 is a diagram of M time domain units according to an embodiment of this application;
FIG. 11 is a diagram of an apparatus according to an embodiment of this application; and
FIG. 12 is a diagram of another apparatus according to an embodiment of this application.

**DESCRIPTION OF EMBODIMENTS**

To make the objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, represents "one or more". "At least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. For example, A/B indicates A or B. "At least one of the following items" or a similar expression thereof means any combination of these items, including a single item or any combination of a plurality of items. For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not used to limit sizes, content, a sequence, a time sequence, priorities, importance, or the like of the plurality of objects. For example, a first cycle and a second cycle may be a same cycle or different cycles. In addition, the names do not indicate a difference in duration, application scenarios, priorities, importance, or the like of the two cycles. In addition, step numbers in embodiments described in this application are merely used to distinguish between different steps, and are not used to limit a sequence of the steps. For example, S401 may be performed before S402, may be performed after S402, or may be simultaneously performed with S402.

The following explains and describes some terms or concepts in embodiments of this application, to facilitate understanding by a person skilled in the art.

In embodiments of this application, a terminal device is a device having a wireless transceiver function, and may be a stationary device, a mobile device, a handheld device (for example, a mobile phone), a wearable device, a vehicle-mounted device, or a wireless apparatus (for example, a communication module, a modem, a chip system, or the like) built in the foregoing device. The terminal device is configured to connect people, things, machines, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable scenario, smart transportation, a smart city (smart city), an uncrewed aerial vehicle, a robot, and the like. The terminal device may be sometimes referred to as UE, a terminal, an access station, a UE station, a remote station, a wireless communication device, a user apparatus, or the like. For ease of description, an example in which the terminal device is UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station subsequently evolved from the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a roadside unit (roadside unit, RSU). An example in which the access network device is a base station is used below for description. The base station may communicate with the terminal device, or may communicate with the terminal device through a relay station. The terminal device may communicate with a plurality of base stations in different access technologies. The core network device is configured to implement mobility management, data processing, session management, policy and charging, and another function. Names of devices implementing a core network function in systems of different access technologies may be different. This is not limited in embodiments this application. In an example of a 5G system, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

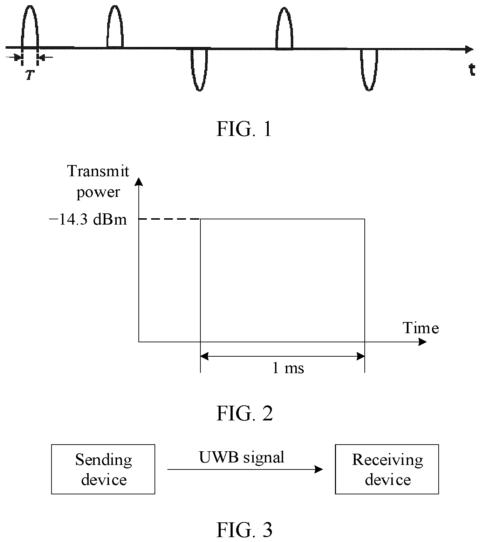

In a UWB technology, high-precision positioning or data transmission can be implemented by sending nanosecond-level short pulses. In a UWB communication system, a sending device may use a pulse waveform to carry information that needs to be transmitted, and send the pulse waveform. For example, for a pulse $p(t)$ whose duration is $T$, in a binary phase shift keying (binary phase shift keying, BPSK)-based modulation scheme, if an information bit is "1", $p(t)$ may be sent; or if an information bit is "0", -p(t) may be sent. A receiving device may determine, by detecting whether an amplitude of a received waveform is 1 or -1, whether a corresponding information bit is "1" or "0". If an information bit stream that needs to be transmitted by the sending device is "11010", a sent pulse waveform may be shown in FIG. 1.

Alternatively, in addition to BPSK modulation, there may be another pulse sending manner to indicate the information bit. For example, if the information bit is "1", $p(t)$ may be sent; or if the information bit is "0", no pulse may be sent. For another example, one information bit may be represented by using a plurality of pulses. For example, if the information bit is "1", a plurality of pulses $p(t)$ may be continuously sent; or if the information bit is "0", a plurality of pulses -p(t) may be continuously sent.

Based on a requirement of UWB regulations, a UWB device needs to occupy at least a 500-MHz channel bandwidth, and a PSD in each 1-ms period does not exceed -41.3 dBm/MHz. Therefore, at the 500-MHz channel bandwidth, total transmit energy in each 1-ms period cannot exceed 37 nJ. As shown in FIG. 2, if the sending device performs continuous transmission to the receiving device in 1 ms, it means that transmit power of the sending device cannot exceed -41.3 + 10 * $log_{10}$500 = -14.3 *dBm.* It may be learned that under the constraint of the foregoing transmit power, it is clear that a communication distance of the UWB device is limited, that is, a coverage area of the UWB device is limited.

To increase the transmit power, a direct method is to increase the channel bandwidth. For example, if the channel bandwidth is increased from 500 MHz to 1 GHz, maximum transmit power of the UWB device may be increased by 3 dB; or if the channel bandwidth is increased from 500 MHz to 1.5 GHz, maximum transmit power of the UWB device may be increased by 4.8 dB. However, increasing the channel bandwidth requires a higher sampling rate of an analog-to-digital converter (analog-to-digital converter, ADC)/digital-to-analog converter (digital-to-analog converter, DAC) of the UWB device, and a higher channel bandwidth indicates shorter pulse duration and a higher requirement for synchronization precision, resulting in an increase in processing complexity and power consumption.

In view of this, the technical solutions in embodiments of this application are provided. In embodiments of this application, a sending device may sequentially send UWB frames to a receiving device on a plurality of channels in first duration less than or equal to 1 millisecond. This is equivalent to replacing an original channel with the plurality of channels. After the plurality of channels are used, duration of each channel is reduced compared with duration of an existing channel, so that power on each channel is increased compared with power on the existing channel. For example, in a case of a fixed amount of channel energy, if the original channel is replaced with M channels, transmit power on one of the M channels may be M times transmit power on the original channel. It may be learned that according to the technical solutions in embodiments of this application, transmit power for a UWB signal can be effectively increased, thereby increasing a coverage area of a UWB device. In addition, according to the technical solutions in embodiments of this application, a channel bandwidth does not need to be increased. Therefore, there is no additional processing complexity caused because the channel bandwidth is increased.

FIG. 3 shows an application scenario according to an embodiment of this application. FIG. 3 includes a sending device and a receiving device. For example, both the two devices are UWB devices. If a device has a UWB function (for example, a UWB chip is disposed in the device), the device may be referred to as a UWB device. Certainly, in addition to the UWB function, the device may further have another function. For example, a mobile phone may have the UWB function, but the mobile phone may further have a call function and the like. This is not limited in this embodiment of this application. The sending device can send a UWB signal, for example, a UWB frame, to the receiving device. The UWB frame may be used for, for example, ranging, or may be used for another communication function. This is not limited in this embodiment of this application. For example, the sending device is a network device, and the receiving device is a terminal device. Alternatively, the sending device is a terminal device, and the receiving device is a network device. Alternatively, both the sending device and the receiving device are network devices. Alternatively, both the sending device and the receiving device are terminal devices.

The technical solutions provided in embodiments of this application are described below in detail with reference to the accompanying drawings. In embodiments of this application, all optional steps are represented by using dashed lines in the corresponding accompanying drawings. In the following description process, an example in which all the methods provided in embodiments of this application are applied to the network architecture shown in FIG. 3 is used. For example, the sending device in embodiments of this application is, for example, the sending device in the network architecture shown in FIG. 3, and the receiving device in embodiments of this application is, for example, the receiving device in the network architecture shown in FIG. 3.

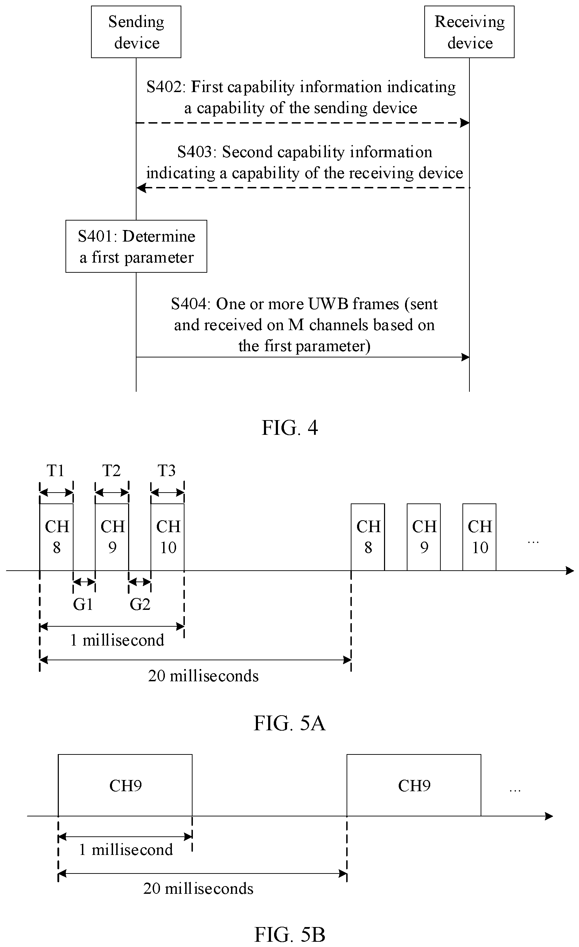

An embodiment of this application provides a communication sending method. FIG. 4 is a flowchart of the method.

S401: A sending device determines a first parameter.

The first parameter may include a transmission parameter of the sending device on M channels, and M is an integer greater than or equal to 2. For example, all the M channels are located in first duration in time domain, and channels with adjacent transmission times in the M channels may not overlap in time domain. The first duration is less than or equal to 1 millisecond (ms). It may be learned that duration of each of the M channels is less than or equal to 1 ms, and total duration of the M channels is less than or equal to 1 ms. Optionally, bandwidths of the M channels may be equal, for example, 500 MHz, or may be unequal. Optionally, the M channels may be consecutive or inconsecutive in frequency domain. Optionally, duration of different channels in the M channels may be equal, or may be unequal.

For example, frequencies of the M channels are different. This may be understood as that this embodiment of this application provides a frequency hopping transmission mechanism, so that the sending device can implement frequency hopping transmission on the M channels in the first duration. Compared with that in a current solution in which the sending device performs transmission on one channel, duration of each channel is shortened by performing transmission through the M channels. When the channel bandwidth is still 500 MHz, because duration of one channel is shortened, transmit power on one of the M channels is increased compared with transmit power on an existing channel. For example, in a case of a fixed amount of channel energy, if an original channel is replaced with the M channels, transmit power on one of the M channels may be increased by $10 * log_{10}M$ dB compared with that on the original channel. It may be learned that according to the technical solution in this embodiment of this application, transmit power for a UWB signal can be effectively increased, thereby increasing a coverage area of a UWB device. In addition, according to the technical solution in this embodiment of this application, the channel bandwidth does not need to be increased. Therefore, there is no additional processing complexity caused because the channel bandwidth is increased.

FIG. 5A is a diagram of performing transmission on the M channels. In FIG. 5A, M=3 is used as an example. For example, the three channels are respectively represented as CH8, CH9, and CH10, a bandwidth of each of the three channels is 500 MHz, duration of the three channels is respectively T1, T2, and T3, T1=T2=T3, and in the three channels, a time interval between first two channels is G1, and a time interval between last two channels is G2. For example, if a cycle of a UWB service is 20 ms, transmission duration of the sending device in each 20-ms period may be 1 ms, or may be a plurality of 1-ms periods. FIG. 5B is a diagram of performing transmission on one channel. The channel is represented by CH9. Based on FIG. 5B, if the sending device sends a UWB frame on one channel and performs continuous transmission in 1 ms, maximum transmit power of the sending device is -14.3 dBm under the constraint of UWB PSD regulations. However, based on FIG. 5A, if the sending device performs frequency hopping transmission on three channels in 1 ms, where duration of the three channels is equal, for example, duration of each channel is approximately 1/3 ms, maximum transmit power on one of the channels in FIG. 5A may be -9.5 dBm. Compared with that in the solution of performing transmission on one channel shown in FIG. 5B, the maximum transmit power on the channel in this embodiment of this application may be approximately increased by 4.8 dB.

The sending device may independently set the first parameter. In this case, that a sending device determines a first parameter is setting the first parameter. After setting the first parameter, the sending device may indicate the first parameter to a receiving device. For example, the sending device may send first configuration information to the receiving device. The first configuration information may be used to configure the first parameter. The receiving device can obtain the first parameter based on the first configuration information.

Alternatively, the first parameter may be set by a receiving device. After setting the first parameter, the receiving device may indicate the first parameter to the sending device. For example, the receiving device may send first configuration information to the sending device. The first configuration information may be used to configure the first parameter. In this case, that a sending device determines a first parameter may be specifically that the sending device obtains the first parameter based on the first configuration information.

Optionally, the first configuration information may be included in a UWB frame. For example, the first configuration information may be included in a media access control header (media access control header, MHR) or a physical header (physical header, PHR) of the UWB frame. Alternatively, the first configuration information may be included in another type of frame, for example, a Bluetooth frame or the like.

Alternatively, the first parameter may be preset, for example, predefined by using a protocol, or may be determined by the sending device and a receiving device through negotiation. A manner of determining the first parameter is not limited in this embodiment of this application.

The first parameter may have a plurality of different implementations. Examples are used below for description.

1. First implementation of the first parameter

The first parameter may include (or indicate) one or more of the following: a first cycle, an arrangement sequence of or a frequency hopping pattern followed by the M channels in the first duration, duration of each of the M channels in the first duration or a duration ratio of each of the M channels to the first duration, a time interval between two channels with adjacent transmission times in the M channels, valid duration information of the first parameter, an identifier of a channel and/or a time range used by the receiving device to send acknowledgment information, or a time offset between a frame carrying the first configuration information and the 1st channel in the M channels. The 1st channel in the M channels may be a channel earliest sent in the M channels, a channel that first arrives in time in the M channels, or the channel that is the first one in a frequency hopping sequence of the M channels. The acknowledgment information may also be referred to as feedback information or the like, for example, is an acknowledgment (ACK) or a negative acknowledgment (NACK). The identifier of the channel is, for example, an index, a sequence number, or the like of the channel.

Duration of the first cycle may be greater than or equal to the first duration. For example, the first cycle may be understood as a cycle of the M channels.

The arrangement sequence of the M channels in the first duration may also be referred to as a frequency hopping sequence of the M channels in the first duration. For example, the first parameter may sequentially include indexes of the M channels, and a sequence of the indexes of the M channels in the first parameter is the arrangement sequence of the M channels. Alternatively, the first parameter may include (or indicate) the frequency hopping pattern followed by the M channels in the first duration. The frequency hopping pattern may be one of a plurality of frequency hopping patterns. The plurality of frequency hopping patterns may be set by the sending device, set by the receiving device and notified to the sending device, determined by the sending device and the receiving device through negotiation, or preset, for example, predefined by using a protocol or the like. One frequency hopping pattern may indicate one arrangement sequence of the M channels. To implement that the first parameter includes the frequency hopping pattern followed by the M channels in the first duration, a manner is to include the frequency hopping pattern (for example, sequentially include indexes of the M channels corresponding to the frequency hopping pattern), and another manner is to include an index of the frequency hopping pattern. For example, M=3, and the three channels are respectively CH8, CH9, and CH10. In this case, a total of six frequency hopping patterns are set: {CH8, CH9, CH10}, {CH8, CH10, CH9}, {CH9, CH8, CH10}, {CH9, CH10, CH8}, {CH10, CH8, CH9}, and {CH10, CH9, CH8}, and indexes of the six frequency hopping patterns are respectively 0 to 5. For example, if the frequency hopping pattern followed by the M channels is {CH8, CH9, CH10}, the first parameter may include the frequency hopping pattern, for example, sequentially include an index of CH8, an index of CH9, and an index of CH10; or the first parameter may include the index of the frequency hopping pattern, for example, 0.

The first parameter may include duration of at least one of the M channels in the first duration. For example, if M=3, and duration of the three channels is respectively T1, T2, and T3, the first parameter may include T1, T2, and T3. Alternatively, if duration of two of the M channels is equal, the first parameter includes duration of one of the channels. For example, if M=3, duration of the three channels is respectively T1, T2, and T3, and T1=T2, the first parameter may include T1 and T3.

Alternatively, the first parameter may include a duration ratio of at least one of the M channels to the first duration. A duration ratio of a channel is a duration ratio of the channel to the first duration or 1 millisecond. For example, if M=3, duration of the three channels is respectively T1, T2, and T3, and the first duration or duration of 1 millisecond is represented by T0, the first parameter may include T1/T0, T2/T0, and T3/T0. Alternatively, if duration ratios of two of the M channels to the first duration are equal, the first parameter includes a duration ratio of one of the channels to the first duration. For example, if M=3, duration ratios of the three channels to the first duration are respectively T1/T0, T2/T0, and T3/T0, and T1=T2, the first parameter may include T1/T0 and T3/T0.

If M=2, the M channels include one group of channels with adjacent transmission times, and the first parameter may include a time interval of the group of adjacent channels. If M>2, the M channels may include a plurality of groups of channels with adjacent transmission times (one group of adjacent channels includes two channels), and time intervals of different groups of adjacent channels may be the same or different. If time intervals of different groups of adjacent channels are the same, the first parameter includes the time interval, that is, the first parameter can indicate a time interval between any two channels with adjacent transmission times in the M channels by including one time interval. Alternatively, if time intervals of different groups of adjacent channels are different, the first parameter may sequentially include time intervals of all groups of adjacent channels. Optionally, a time interval of any group of adjacent channels in the M channels may be greater than or equal to a minimum channel switching time that can be supported by the sending device and a minimum channel switching time that can be supported by the receiving device. That is, the frequencies of the M channels may be different. For a device, it needs to take a specific switching time to switch from a channel in the M channels to another channel, and the switching time is related to a capability of the device. For the sending device, the supported minimum channel switching time is P, that is, a time required by the sending device to switch a channel may be greater than or equal to P. For the receiving device, the indicated minimum channel switching time is Q, that is, a time required by the receiving device to switch a channel may be greater than or equal to Q. In this case, the time interval of any group of adjacent channels in the M channels may be greater than or equal to a largest value in P and Q. In this manner, a sending success rate of the sending device on the M channels can be increased, and a receiving success rate of the receiving device on the M channels can be increased.

The valid duration information of the first parameter may indicate valid duration of the first parameter. For example, the valid duration information may indicate second duration. The sending device may start timing from sending of the first configuration information (or sending of an activation indication to be described below), and when the second duration expires, consider that the first parameter is invalid and no longer use the first parameter. The receiving device may start timing from receiving of the first configuration information (or receiving of the activation indication to be described below), and when the second duration expires, consider that the first parameter is invalid and no longer use the first parameter. Alternatively, the valid duration information may indicate a moment. The moment is, for example, a moment at which the first parameter is invalid. When the moment arrives, both the sending device and the receiving device may determine that the first parameter is invalid and no longer use the first parameter.

If the sending device sends the first configuration information to the receiving device to configure the first parameter, and the first configuration information is further used to activate the first parameter, that is, the first configuration information is used to configure and activate the first parameter, or the first configuration information is used to configure the first parameter and is not used to activate the first parameter, but "configuration" is considered as "activation", the first parameter may further include the time offset between the frame carrying the first configuration information and the 1st channel in the M channels, so that the receiving device can determine a time domain location of the 1st channel in the M channels, and then can determine time domain locations of the M channels. The 1st channel in the M channels is a channel that first arrives in a time sequence in the M channels. The time offset between the frame carrying the first configuration information and the 1st channel in the M channels may be an offset between a start time domain location of the frame and a start time domain location of the 1st channel, an offset between an end time domain location of the frame and an end time domain location of the 1st channel, an offset between an end time domain location of the frame and a start time domain location of the 1st channel, or the like. Time offsets in embodiments of this application are similarly understood. For example, a time offset between a frame and a channel, a time offset between channels, a time offset between a frame and a time window, a time offset between time windows, a time offset between a frame and a time domain unit, or the like may be understood in a similar manner. Details are not described below.

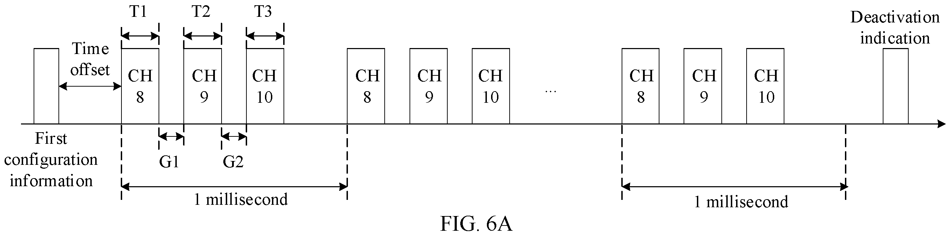

FIG. 6A is a diagram of content indicated by the first parameter in the first implementation. In FIG. 6A, M=3 is used as an example. The first parameter may include a time offset between the frame carrying the first configuration information and the 1st channel in the 1st first cycle, an arrangement sequence of the three channels, duration T1, T2, and T3 of the three channels, and time intervals G1 and G2 between adjacent channels.

The M channels may be sent only for one time. For example, sending of the UWB service may be completed by using only one piece of first duration. Alternatively, the M channels may be sent based on the first cycle, that is, the M channels may be sent for a plurality of times. In this case, for M channels in the 1st first cycle, the time offset that is between the frame carrying the first configuration information and the 1st channel in the M channels and that is included in the first parameter may be a time offset between the frame and the 1st channel in the M channels in the 1st first cycle, and the first configuration information may be sent before the 1st first cycle starts or when the 1st first cycle starts. In this case, provided that a start time domain location of the 1st channel in the 1st first cycle is determined, for a subsequent first cycle, the receiving device may also determine a start time domain location of the 1st channel in each first cycle. Therefore, it may be considered that the first parameter also indicates a time offset between the UWB frame and the 1st channel in M channels in any first cycle. Alternatively, the first parameter may include a time offset between the frame and the 1st channel in M channels in each first cycle.

2. Second implementation of the first parameter

The first parameter may include (or indicate) one or more of the following: duration of each of the M channels in the first duration or a duration ratio of each of the M channels to the first duration, a time offset between a frame carrying the first configuration information and each of the M channels, an identifier of a channel and/or a time range used by the receiving device to send acknowledgment information, or valid duration information of the first parameter. If the first parameter is set by the sending device and configured for the receiving device by using the first configuration information, the first parameter may optionally include the time offset between the frame carrying the first configuration information and each of the M channels.

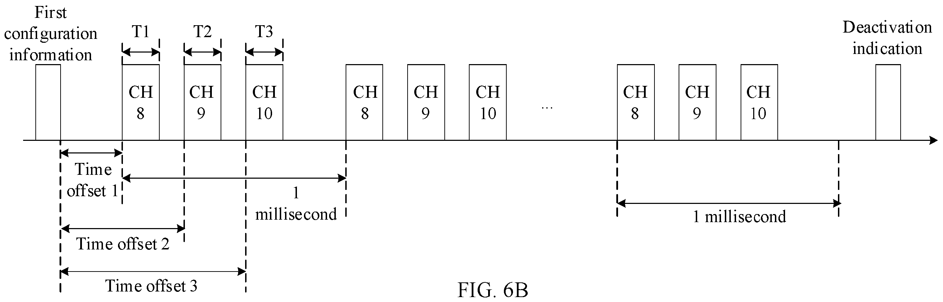

If the sending device sends the first configuration information to the receiving device to configure the first parameter, and the first configuration information is further used to activate the first parameter, that is, the first configuration information is used to configure and activate the first parameter, or the first configuration information is used to configure the first parameter and is not used to activate the first parameter, but "configuration" is considered as "activation", the first parameter may include the time offset between the frame carrying the first configuration information and each of the M channels, so that the receiving device can determine a time domain location of each of the M channels. FIG. 6B is a diagram of content indicated by the first parameter in the second implementation. In FIG. 6B, M=3 is used as an example. The first parameter may include a time offset (a time offset 1, a time offset 2, and a time offset 3 in FIG. 6B) between the first configuration information and each channel in the 1st first cycle, and duration T1, T2, and T3 of the three channels.

The M channels may be sent only for one time. For example, sending of the UWB service may be completed by using only one piece of first duration. Alternatively, the M channels may be sent based on the first cycle, that is, the M channels may be sent for a plurality of times. In this case, for M channels in the 1st first cycle, the time offset that is between the frame carrying the first configuration information and each of the M channels and that is included in the first parameter may be a time offset between the frame and each of the M channels in the 1st first cycle, and the first configuration information may be sent before the 1st first cycle starts or when the 1st first cycle starts. In this case, provided that a start time domain location of each channel in the 1st first cycle is determined, for a subsequent first cycle, the receiving device may also determine a start time domain location of each channel in each first cycle. Therefore, it may be considered that the first parameter also indicates a time offset between the frame and each of M channels in any first cycle. Alternatively, the first parameter may include a time offset between the frame and each of M channels in each first cycle.

3. Third implementation of the first parameter

In this implementation, the first parameter may be considered as a parameter in a low energy consumption mode or an energy saving mode, that is, an energy saving mechanism may be introduced. In the energy saving mechanism, the receiving device may wake up only in an active time to perform receiving, and may not perform receiving or enter a sleep state in another time, to reduce power consumption of the device.

The first parameter may include (or indicate) one or more of the following: a first cycle, a second cycle, a quantity of first cycles included in one second cycle, a time offset between a frame carrying the first configuration information and the 1st first time window in N first time windows (or a time offset between a frame carrying the first configuration information and each of N first time windows), valid duration information of the first parameter, information about some or all of K second time windows in the second cycle, or information about some or all of the N first time windows in the first cycle. Duration of the first cycle is greater than or equal to the first duration, and duration of the second cycle is greater than or equal to the duration of the first cycle. Therefore, the first cycle may also be referred to as a short cycle (short cycle), and the second cycle may also be referred to as a long cycle (long cycle). The N first time windows correspond to the M channels, and N is a positive integer less than or equal to M. Duration of the second time window is second duration. For example, the second duration may be less than or equal to 1 ms. One first time window corresponds to one second time window. For example, there is one second time window before each first time window starts. Alternatively, one first cycle corresponds to one second time window. For example, if there is one second time window before each first cycle starts or when each first cycle starts, a quantity of K may be equal to a quantity of repetition times of the first cycle in the second cycle. Alternatively, one second cycle corresponds to one second time window. For example, if there is one second time window before each second cycle starts or when each second cycle starts, a quantity of K may be equal to 1. K is a positive integer. Optionally, the first time window may also be referred to as an active time window, an on duration window (on duration window), a time window, a wakeup time window, a transmission time window, or the like, and the second time window may also be referred to as a wakeup time window or the like. A name is not limited.

The first cycle is, for example, a cycle of the M channels, or is understood as a cycle of the first duration. The second cycle may be determined based on the cycle of the UWB service. For example, the second cycle is equal to the cycle of the UWB service, for example, 20 ms.

The first parameter indicates information about each of the N first time windows, or may indicate information about some of the N first time windows. For example, based on the indicated information about the some first time windows, the receiving device can determine the information about the some first time windows, and can further determine information about the remaining first time windows. Information that is about a first time window and that is indicated (or included) by the first parameter may include start time domain location information and duration information of the first time window, include end time domain location information and duration information of the first time window, or include a start time domain location and end time domain location information of the first time window, or the like. For example, if a time interval between first time windows with adjacent transmission times in the N first time windows is fixed (for example, predefined, negotiated by the sending device and the receiving device, or configured by the sending device or the receiving device), provided that the first parameter indicates information about one of the N first time windows, the receiving device can determine information about the remaining first time windows.

For example, if N=M, the N first time windows are in a one-to-one correspondence with the M channels. For example, one first time window includes one channel. Alternatively, N may be less than M. In this case, a plurality of channels may correspond to one first time window. For example, if a time interval between channels with adjacent transmission times in the M channels is 0 or a preset value, N may be 1, that is, the M channels can be covered by setting only one first time window. For example, the receiving device may wake up only in the first time window to receive a UWB signal, and may not receive a UWB signal (or not detect a UWB signal) or enter the sleep state in a time other than the first time window, to reduce receiving power consumption of the device.

The first parameter indicates information about each of the K second time windows, or may indicate information about some of the K second time windows. For example, based on the indicated information about the some second time windows, the receiving device can determine the information about the some second time windows, and can further determine information about the remaining second time windows. For example, if a time interval between second time windows with adjacent transmission times in the K second time windows is fixed (for example, predefined, negotiated by the sending device and the receiving device, or configured by the sending device or the receiving device), provided that the first parameter indicates information about one of the K second time windows, the receiving device can determine information about the remaining second time windows. Information that is about a second time window and that is indicated (or included) by the first parameter may include one or more of the following: start time domain location information of the second time window, duration information of the second time window, or a time offset between a nearest first time window and a start time domain location and/or an end time domain location of the second time window. For an understanding of a time offset between two time windows, refer to the foregoing descriptions. Optionally, the start time domain location information and the duration information that are of the second time window and that are indicated by the first parameter may be replaced with end time domain location information and the duration information of the second time window, the start time domain location and end time domain location information of the second time window, or the like.

The second time window may indicate whether to receive a UWB frame, or indicate to receive a UWB frame. For example, the sending device may send third indication information in some or all of the K second time windows.

Correspondingly, the receiving device may receive the third indication information from the sending device in the corresponding second time windows. The third indication information may indicate whether to receive a UWB frame in next one or more first time windows, or indicate whether there is a to-be-transmitted UWB frame in next one or more first time windows. Alternatively, the third indication information may indicate to receive a UWB frame in next one or more first time windows, or indicate that there is a to-be-transmitted UWB frame in next one or more second time windows. For example, the third indication information may occupy 1 bit. If a value of the bit is "1", it indicates to receive a UWB frame in next one or more first time windows; or if a value of the bit is "0", it indicates not to receive a UWB frame in next one or more first time windows. In this case, the sending device may send the third indication information in each second time window. For another example, if the sending device sends third indication information in one second time window, it indicates to receive a UWB frame in next one or more first time windows; or if the sending device does not send third indication information in one second time window, it indicates not to receive a UWB frame in next one or more first time windows. In this case, the sending device does not necessarily send the third indication information in each second time window, to help reduce transmission overheads.

The one or more first time windows indicated by the third indication information may be time windows consecutive in time domain, or may be inconsecutive in time domain. For the receiving device, if determining, based on the third indication information, to receive a UWB frame in a first time window, the receiving device may receive (or detect) a UWB signal in the first time window; or if determining, based on the third indication information, not to receive a UWB frame in a first time window, the receiving device may not receive (or detect) a UWB signal in the first time window. In another possible implementation, if an implementation mechanism of the third indication information is that the third indication information indicates whether to receive a UWB frame in next one or more first time windows (for example, the sending device sends the third indication information in each second time window), and if the receiving device does not receive the third indication information from the sending device (for example, the sending device does not send the third indication information, or the receiving device fails to receive the third indication information), the receiving device may also receive (or detect) a UWB signal in the next first time window. This is equivalent to that the second time window may indicate the receiving device to wake up or enter the sleep state, and the first time window is a time window in which the receiving device wakes up to receive a UWB signal. In a time other than the first time window and the second time window, the receiving device may enter a state of not receiving (or not detecting) a UWB signal or enter the sleep state. Therefore, this embodiment of this application may be considered as an energy saving mechanism, the first time window may be considered as an on duration time in the energy saving mechanism, and the second time window may be located before the first time window. The energy saving mechanism is introduced, so that the receiving device may not receive a UWB signal or enter the sleep state in a time other than the first time window and the second time window, to reduce receiving power consumption of the device.

To implement that the third indication information indicates the one or more first time windows, for example, an indication manner is that the third indication information includes an index of the one or more first time windows. Alternatively, if the one or more first time windows are first time windows consecutive in time domain, the first indication information may include an index of the 1st first time window in the one or more first time windows, and an index offset or a time offset between a last first time window and the 1st first time window in the one or more first time windows. Alternatively, the one or more first time windows indicated by the third indication information may be preset. For example, if the one or more first time windows are predefined in a protocol (for example, the protocol specifies that the third indication information may indicate R consecutive first time windows after the third indication information, and R is a positive integer), preconfigured by the sending device and notified to the receiving device, preconfigured by the receiving device and notified to the sending device, or determined by the sending device and the receiving device through negotiation, the third indication information only needs to indicate whether to receive a UWB frame, and does not need to indicate the first time window.

Optionally, the third indication information may further include address information of the receiving device, an identifier of the receiving device, or the like, so that the receiving device determines that the receiving device is a receive end of the third indication information, and then receives a UWB frame or does not receive a UWB frame in next one or more first time windows based on the third indication information.

Optionally, the third indication information may be included in a UWB frame. The UWB frame may include one or more of an SHR, a PHR, a PHY payload, or another field, and the PHY payload may further include an MHR and another field. For example, the third indication information may be included in the PHR of the UWB frame, or included in the MHR in the PHY payload of the UWB frame.

The third indication information indicates whether to receive a UWB frame in next one or more first time windows. For example, in an indication manner, the third indication information is implemented by using a first sequence, and the first sequence may indicate whether to receive a UWB frame in next one or more first time windows. In this case, content indicated by the third indication information (or the third indication information) may be determined based on an index of the first sequence. For example, if the third indication information uses a first sequence with an index of a, it indicates to receive a UWB frame in next one or more first time windows; or if the third indication information uses a first sequence with an index of b, it indicates not to receive a UWB frame in next one or more first time windows. In this manner, a format (or an index) of the third indication information can indicate whether to receive a UWB frame, and no more content needs to be carried in the third indication information, to reduce transmission overheads. In addition, different first sequences may correspond to different first time windows. For example, there are four first sequences, and indexes are respectively a, b, c, and d. Both a first sequence with an index of a and a first sequence with an index of c indicate to receive a UWB frame in next one or more first time windows, and both a first sequence with an index of b and a first sequence with an index of d indicate not to receive a UWB frame in next one or more first time windows. The first time windows corresponding to the index a and the index b are next three consecutive first time windows after the first indication information ends, and the first time windows corresponding to the index c and the index d are a next 1st first time window and a next 3rd first time window after the first indication information ends. In this case, if there is a need to indicate to receive a UWB frame in next one or more first time windows, the sending device may select the first sequence with the index of a as the third indication information or the first sequence with the index of c as the third indication information based on the first time window that needs to be indicated. Alternatively, if there is a need to indicate not to receive a UWB frame in next one or more first time windows, the sending device may select the first sequence with the index of b as the third indication information or the first sequence with the index of d as the third indication information based on the first time window that needs to be indicated.

If the sending device sends the first configuration information to the receiving device to configure the first parameter, and the first configuration information is further used to activate the first parameter, that is, the first configuration information is used to configure and activate the first parameter, or the first configuration information is used to configure the first parameter and is not used to activate the first parameter, but "configuration" is considered as "activation", the first parameter may include the time offset between the frame carrying the first configuration information and the 1st first time window in the N first time windows or a time offset between the frame carrying the first configuration information and the 1st second time window in the K second time windows, so that the receiving device can determine time domain locations of the N first time windows or time domain locations of the K second time windows.

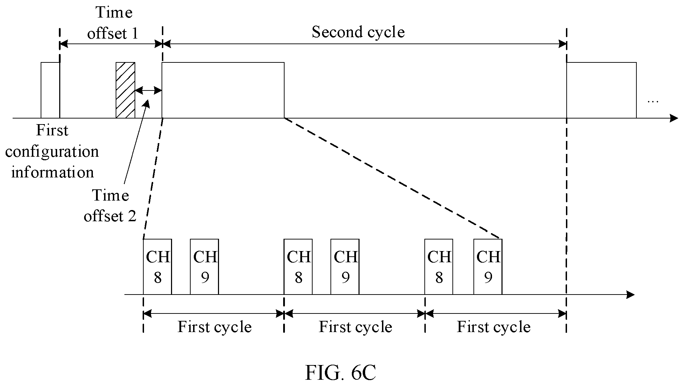

FIG. 6C is a diagram of content indicated by the first parameter in the third implementation. In FIG. 6C, M=2 and N=2 are used as an example. Two channels are respectively CH8 and CH9, CH8 is located in one first time window, and CH9 is located in the other first time window. For example, duration of CH8 is the same as duration of the first time window in which CH8 is located, and duration of CH9 is the same as duration of the first time window in which CH9 is located. In addition, the 1st blank box in the second cycle in FIG. 6C may indicate a sending time of the sending device in one second cycle. For example, the sending time may cover one or more first cycles. The first parameter may include a time offset (a time offset 1 in FIG. 6C) between the first configuration information and the 1st first time window in the 1st first cycle, start time domain location information and duration information of the three first time windows, start time domain location information and duration information of the second time window, and a time offset (a time offset 2 in FIG. 6C) between the second time window and a nearest first time window. In FIG. 6C, a box marked with slashes represents the second time window. In FIG. 6C, an example in which the second time window corresponds to the second cycle is used.

The N first time windows may appear only for one time. For example, sending of the UWB service may be completed by using only one piece of first duration. Alternatively, the N first time windows may appear based on the first cycle, that is, the N first time windows may appear for a plurality of times. In this case, for N first time windows in the 1st first cycle, the time offset that is between the UWB frame carrying the first configuration information and the 1st first time window in the N first time windows and that is included in the first parameter may be a time offset between the frame and the 1st first time window in the N first time windows in the 1st first cycle, and the first configuration information may be sent before the 1st first cycle starts or when the 1st first cycle starts. In this case, provided that a start time domain location of the 1st first time window in the 1st first cycle is determined, for a subsequent first cycle, the receiving device may also determine a start time domain location of the 1st first time window in each first cycle. Therefore, it may be considered that the first parameter also indicates a time offset between the frame and the 1st first time window in N first time windows in any first cycle. Alternatively, the first parameter may include a time offset between the frame and the 1st first time window in N first time windows in each first cycle.

In addition to the foregoing three implementations, the first parameter may be implemented in another manner. This is not specifically limited.

As described above, the first configuration information may be used to configure the first parameter and further used to activate the first parameter, or the first configuration information is used to configure the first parameter and is not used to activate the first parameter, but "configuration" is considered as "activation". In this case, the first configuration information may also be referred to as parameter indication information or the like, and the first configuration information may be dynamically sent.

Alternatively, the first configuration information may be used to configure the first parameter and not used to activate the first parameter, and "configuration" is not considered as "activation", that is, activation further needs to be performed after configuration. In this case, the first configuration information may be semi-statically configured. That is, after the first parameter is configured by using the first configuration information, the first parameter may be used for a plurality of times. In addition, in this case, the sending device may further send an activation indication, to activate the first parameter. For example, the sending device may first send the first configuration information, and then send the activation indication. Optionally, both the first configuration information and the activation indication may be sent before 1st first duration (or before the 1st first cycle). The receiving device may obtain the first parameter based on the first configuration information, and may use the first parameter after receiving the activation indication. Optionally, the activation indication may be included in a UWB frame, for example, may be included in an MHR or a PHR of the UWB frame. The UWB frame carrying the first configuration information and the UWB frame carrying the activation indication are, for example, different UWB frames.

In the first implementation of the first parameter, the first parameter may include (or indicate) the time offset between the frame carrying the first configuration information and the 1st channel in the M channels. In the second implementation of the first parameter, the first parameter may include (or indicate) the time offset between the frame carrying the first configuration information and each of the M channels. In the third implementation of the first parameter, the first parameter may include (or indicate) the time offset between the frame carrying the first configuration information and the 1st (or each) first time window in the N first time windows. In this case, if the sending device needs to send both the first configuration information and the activation indication, information (for example, several types of information listed in this paragraph) that is related to the first configuration information and that is included in the first parameter may be replaced with information related to the activation indication. In addition, the information related to the activation indication may not be included in the first configuration information, but is included in the activation indication. This is equivalent to that the first parameter may be separately carried in the first configuration information and the activation indication.

For example, in the first implementation of the first parameter, the first parameter may include (or indicate) a time offset between a frame carrying the activation indication and the 1st channel in the M channels, and the time offset may be included in the activation indication. In the second implementation of the first parameter, the first parameter may include (or indicate) a time offset between a frame carrying the activation indication and each of the M channels, and the time offset may be included in the activation indication. In the third implementation of the first parameter, the first parameter may include (or indicate) a time offset between a frame carrying the activation indication and the 1st (or each) first time window in the N first time windows, and the time offset may be included in the activation indication. Optionally, the frame carrying the activation indication is, for example, a UWB frame, or may be another type of frame, for example, a Bluetooth frame or the like.

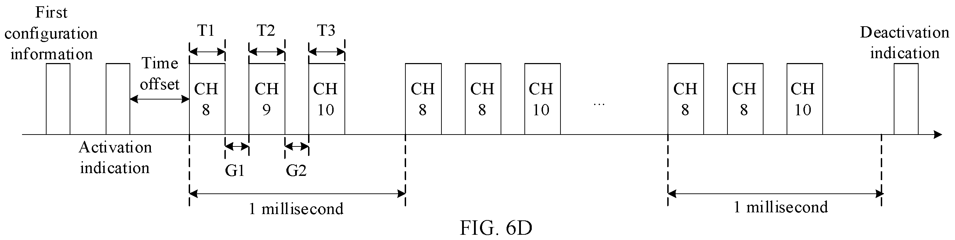

The first implementation of the first parameter is used as an example. FIG. 6D is a diagram of content indicated by the first parameter in the first implementation. In FIG. 6D, M=3 is used as an example. The first parameter may include a time offset between the activation indication and the 1st channel in the 1st first cycle, and the time offset is included in the activation indication. The first parameter further includes an arrangement sequence of the three channels, duration T1, T2, and T3 of the three channels, and time intervals G1 and G2 between adjacent channels, and the content may be included in the first configuration information.

Optionally, regardless of whether the sending device sends the first configuration information and does not send the activation indication, or sends both the first configuration information and the activation indication, when there is no need to continue to use the first parameter, the sending device may send a deactivation indication, to deactivate the first parameter. For example, the deactivation indication may be sent after a last first cycle ends. After sending the deactivation indication, the sending device no longer uses the first parameter. After receiving the deactivation indication, the receiving device no longer uses the first parameter. The deactivation indication is shown in FIG. 6A, FIG. 6B, and FIG. 6D. Optionally, the deactivation indication may be included in a UWB frame, for example, may be included in an MHR or a PHR of the UWB frame.

Alternatively, if the first parameter includes the valid duration information of the first parameter, both the sending device and the receiving device can determine a use time of the first parameter based on the valid duration information, and the sending device may not need to send the deactivation indication.

Optionally, the method further includes S402 and/or S403.

S402: The sending device sends first capability information to the receiving device. Correspondingly, the receiving device receives the first capability information from the sending device. The first capability information may indicate a capability of the sending device. For example, the first capability information may indicate an identifier of a channel (for example, an index of the channel) supported by the sending device, and/or indicate channel switching capability information supported by the sending device.

The channel switching capability information supported by the sending device may indicate a minimum time required for a component such as a phase-locked loop (phase-locked loop, PLL) of the sending device to stabilize in a process in which the sending device switches from a channel to another channel. The minimum time may also be understood as, for example, a minimum channel switching time of the sending device. For example, the minimum channel switching time approximately ranges from 10 μs to 100 μs. The channel switching capability information that is supported by the sending device and that is indicated by the first capability information includes, for example, the minimum channel switching time of the sending device, or level information to which the minimum channel switching time of the sending device belongs. For example, a plurality of levels may be defined. For a correspondence between a level and a minimum channel switching time, refer to Table 1. For example, the correspondence referenced in this embodiment of this application may include one or more items in Table 1, and one row in Table 1 is considered as one item.

**Table 1**

| Level | Minimum channel switching time |
|---|---|
| 0 | Less than or equal to 10 $\mu$s |
| 1 | Greater than 10 $\mu$s and less than or equal to 20 $\mu$s |
| 2 | Greater than 20 $\mu$s and less than or equal to 30 $\mu$s |
| 3 | Greater than 30 $\mu$s and less than or equal to 40 $\mu$s |
| 4 | Greater than 40 $\mu$s and less than or equal to 50 $\mu$s |
| 5 | Greater than 50 $\mu$s and less than or equal to 60 $\mu$s |
| 6 | Greater than 60 $\mu$s and less than or equal to 70 $\mu$s |
| 7 | Greater than 70 $\mu$s and less than or equal to 80 $\mu$s |
| 8 | Greater than 80 $\mu$s and less than or equal to 90 $\mu$s |
| 9 | Greater than 90 $\mu$s and less than or equal to 100 $\mu$s |

For example, if a level indicated by the first capability information is 8, it indicates that the minimum channel switching time supported by the sending device is greater than 80 $\mu$s and less than or equal to 90 $\mu$s. Alternatively, for the correspondence between the level and the minimum channel switching time in this embodiment of this application, refer to another correspondence instead of Table 1. For example, a coarser or finer granularity or the like may be obtained through division. This is not specifically limited.

If the receiving device sets the first parameter, the sending device may send the first capability information to the receiving device by using S402. Optionally, S402 may be performed before S401 (for example, S402 may be performed in a process of discovering the sending device and the receiving device, or in a process of establishing a connection between the sending device and the receiving device, or when connection establishment is completed). In this way, the receiving device may refer to the first capability information when setting the first parameter. For example, the receiving device may determine the M channels based on the identifier of the channel supported by the sending device and an identifier of a channel supported by the receiving device, so that both the sending device and the receiving device can support the M channels. For another example, the receiving device may set the time interval between channels with adjacent transmission times in the M channels based on the channel switching capability information of the sending device and channel switching capability information of the receiving device, to increase a sending success rate and a receiving success rate of the UWB signal.

Alternatively, even if the first parameter is not set by the receiving device, for example, set or preset by the sending device or determined through negotiation between the devices, the sending device may send the first capability information to the receiving device by using S402, so that the receiving device can learn of the capability of the sending device.

S403: The receiving device sends second capability information to the sending device. Correspondingly, the sending device receives the second capability information from the receiving device. The second capability information may indicate a capability of the receiving device. For example, the second capability information may indicate the identifier of the channel (for example, an index of the channel) supported by the receiving device, and/or indicate the channel switching capability information supported by the receiving device. For the channel switching capability information supported by the receiving device, refer to the descriptions of the channel switching capability information supported by the receiving device in S402.

If the sending device sets the first parameter, the receiving device may send the second capability information to the sending device by using S403. Optionally, S403 may be performed before S401 (for example, S403 may be performed in the process of discovering the sending device and the receiving device, or in the process of establishing a connection between the sending device and the receiving device, or when connection establishment is completed). In this way, the sending device may refer to the first capability information when setting the first parameter. For a reference manner, refer to the descriptions of S402. In addition, if both S402 and S403 are performed, S402 may be performed before S403, may be performed after S403, or may be simultaneously performed with S403.

Alternatively, even if the first parameter is not set by the sending device, for example, set or preset by the receiving device or determined through negotiation between the devices, the receiving device may send the second capability information to the sending device by using S403, so that the sending device can learn of the capability of the receiving device.

S404: The sending device sequentially sends one or more UWB frames to the receiving device on the M channels in the first duration based on the first parameter. Correspondingly, the receiving device sequentially receives the one or more UWB frames from the sending device on the M channels in the first duration based on the first parameter. At least one UWB frame may be transmitted on one channel.

After channel switching, the sending device and the receiving device may need to perform synchronization again. If one part of a UWB frame is transmitted on a channel 1, and the other part is transmitted on a channel 2, a synchronization header (including information used for synchronization) of the UWB frame may be carried on the channel 1. After switching to the channel 2 is performed, the sending device and the receiving device possibly cannot perform synchronization based on the UWB frame, resulting in failure of receiving by the receiving device. Therefore, optionally, any one of the one or more UWB frames may be sent only on one of the M channels. That is, the sending device usually does not send one UWB frame on two or more channels. The receiving device also receives any one of the one or more UWB frames on one of the M channels.

After indicating the first parameter to the receiving device, the sending device may perform frequency hopping transmission on the M channels based on the first parameter, and the receiving device performs receiving based on the first parameter. Maximum transmit power of the sending device on a first channel in the M channels may be determined based on duration of the first channel, and the first channel is, for example, any one of the M channels.

In this embodiment of this application, the maximum transmit power also meets a constraint of UWB PSD regulations. For example, a PSD corresponding to the maximum transmit power in 1 ms may be less than or equal to a first threshold. The first threshold is, for example, an upper limit of a PSD, in 1 ms, of a channel carrying the UWB frame. Optionally, the PSD corresponding to the maximum transmit power in 1 ms may be as close as possible to the first threshold. An objective of this embodiment of this application is to enable the PSD corresponding to the maximum transmit power in 1 ms to be equal to the first threshold, so that the sending device can reach the maximum transmit power, to increase the coverage area of the UWB device to a larger extent. For example, based on a requirement of the UWB regulations, the UWB device needs to occupy at least a 500-MHz channel bandwidth, and a PSD in each 1-ms period does not exceed -41.3 dBm/MHz. In this case, the first threshold is, for example, -41.3 dBm/MHz. Alternatively, the first threshold may change with the UWB regulations or the like. This is not limited.

Optionally, the maximum transmit power may meet the following relationship:

$$P_{max}=A + 10 * log_{10}(BW/1MHz) + 10 * log_{10}(1ms/\text{T}) \qquad \text{(formula 1)}$$

In the formula 1, $P_{max}$ represents the maximum transmit power, $A$ represents the first threshold, $BW$ represents a bandwidth of the first channel, and $T$ represents the duration of the first channel. For example, if T=1/3 ms, $BW$=500 MHz, and A=-41.3 dBm/MHz, $P_{max}$=-9.5 dBm may be obtained by performing substitution into the formula 1.

The sending device may determine maximum transmit power on each of the M channels based on the formula 1. When a channel is sent, actual transmit power may be less than or equal to maximum transmit power on the channel. However, the sending device may enable actual transmit power on a channel to be as close as possible to maximum transmit power on the channel, to increase a coverage area of the sending device to a larger extent.

If the first parameter uses the third implementation described in S401, in this embodiment of this application, an example in which the third indication information indicates to receive a UWB frame in next one or more first time windows is used. If the third indication information indicates not to receive a UWB frame in next one or more first time windows, S404 may not be performed.

In addition, if the first parameter uses the third implementation, optionally, the sending device may use some or all of the one or more sent UWB frames to carry second indication information, to indicate whether there is a to-be-transmitted UWB frame, indicate whether to continue to receive a UWB frame, indicate whether subsequently there is a UWB frame, or indicate whether there is a next UWB frame. For example, the one or more UWB frames include a first UWB frame, and the first UWB frame may include the second indication information. After receiving the first UWB frame, the receiving device may determine, based on the second indication information, whether there is a to-be-transmitted UWB frame. Optionally, the second indication information may be carried in an MHR or a PHR of the first UWB frame. For example, the second indication information may occupy 1 bit (bit). If a value of the bit is "1 ", it indicates that there is a to-be-transmitted UWB frame; or if a value of the bit is "0", it indicates that there is no to-be-transmitted UWB frame.

The first UWB frame is, for example, a frame transmitted in any one of N first time windows included in a first cycle, and may be the 1st UWB frame transmitted in the first time window, a middle UWB frame transmitted in the first time window, or a last UWB frame transmitted in the first time window. If the first UWB frame is a last frame transmitted in any first time window other than a last first time window in N first time windows in a first cycle, and if the second indication information indicates that there is a to-be-transmitted UWB frame, the receiving device continues to receive a UWB frame in a next first time window of the first time window. Between the two first time windows, the receiving device may enter the state of not receiving (or detecting) a UWB signal or enter the sleep state. If the first UWB frame is a last frame transmitted in a last first time window in N first time windows in a first cycle, and if the second indication information indicates that there is a to-be-transmitted UWB frame, the receiving device continues to receive a UWB frame in the 1st first time window in a next first cycle in the second cycle. Between the two first time windows, the receiving device may enter the state of not receiving (or detecting) a UWB signal or enter the sleep state.

Optionally, if the first UWB frame is a last frame transmitted in a last first time window in M first time windows in a first cycle, and the second indication information indicates that there is a to-be-transmitted UWB frame, the receiving device may start a first timer, for example, the first timer may also be referred to as an idle timer (idle timer) or the like, to wait for continuing to receive a UWB frame on the 1st channel in a next first cycle. Timing duration of the first timer may be configured by the sending device or the receiving device, determined by the sending device and the receiving device through negotiation, or preset, for example, predefined by using a protocol or the like. For example, the timing duration of the first timer may be less than or equal to a time interval between an end time domain location of a last first time window in a first cycle and a start time domain location of the 1st first time window in a next first cycle. During running of the first timer, the receiving device may enter the state of not receiving (or detecting) a UWB signal or enter the sleep state.

Alternatively, if the second indication information indicates that there is no to-be-transmitted UWB frame, regardless of the fact that the first UWB frame is a UWB frame transmitted in a specific first time window in the N first time windows, and regardless of whether there is still a first cycle after a current first cycle, the receiving device may enter the state of not receiving (or not detecting) a UWB frame or enter the sleep state until a current second cycle ends. This is equivalent to that the second indication information may deactivate the next one or more first time windows.

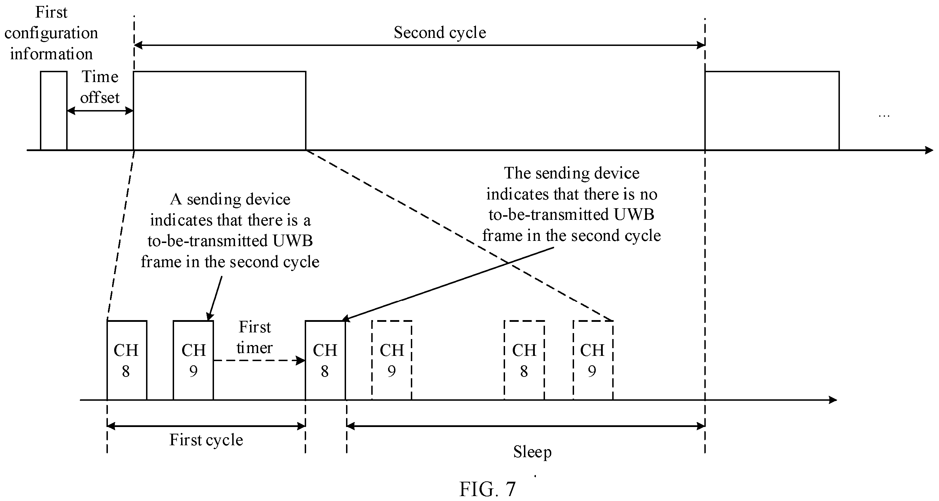

FIG. 7 is a diagram of the second indication information. In FIG. 7, M=2 and N=2 are used as an example. Two channels are respectively CH8 and CH9, CH8 is located in one first time window, and CH9 is located in the other first time window. FIG. 7 further shows a time offset between the first configuration information included in the first parameter and the 1st first time window in the 1st first cycle. It may be learned from FIG. 7 that for example, if second indication information carried in a UWB frame sent by the sending device in the first time window in which CH9 is located indicates that there is a to-be-transmitted UWB frame, and the first time window in which CH9 is located is a last first time window in the current first cycle, the receiving device may start the first timer. The timing duration of the first timer is, for example, equal to a time interval between an end time domain location of the first time window in which CH9 is located and a start time domain location of a first time window in which CH8 is located in a next first cycle. However, in the next first cycle, if second indication information carried in a UWB frame sent by the sending device in the first time window in which CH8 is located indicates that there is no to-be-transmitted UWB frame, the receiving device may enter the state of not receiving (or not detecting) a UWB signal or enter the sleep state starting from CH9 (or starting from the end of CH8) until the current second cycle ends.

In this embodiment of this application, the sending device may sequentially send UWB frames to the receiving device on a plurality of channels in the first duration less than or equal to 1 ms. This is equivalent to replacing an original channel with the plurality of channels. After the plurality of channels are used, duration of each channel is reduced compared with duration of an existing channel, so that transmit power on each channel is increased compared with transmit power on the existing channel. For example, in a case of a fixed amount of channel energy, if the original channel is replaced with the M channels, transmit power on one of the M channels may be M times transmit power on the original channel. It may be learned that according to the technical solution in this embodiment of this application, transmit power for a UWB signal can be effectively increased, thereby increasing a coverage area of a UWB device.

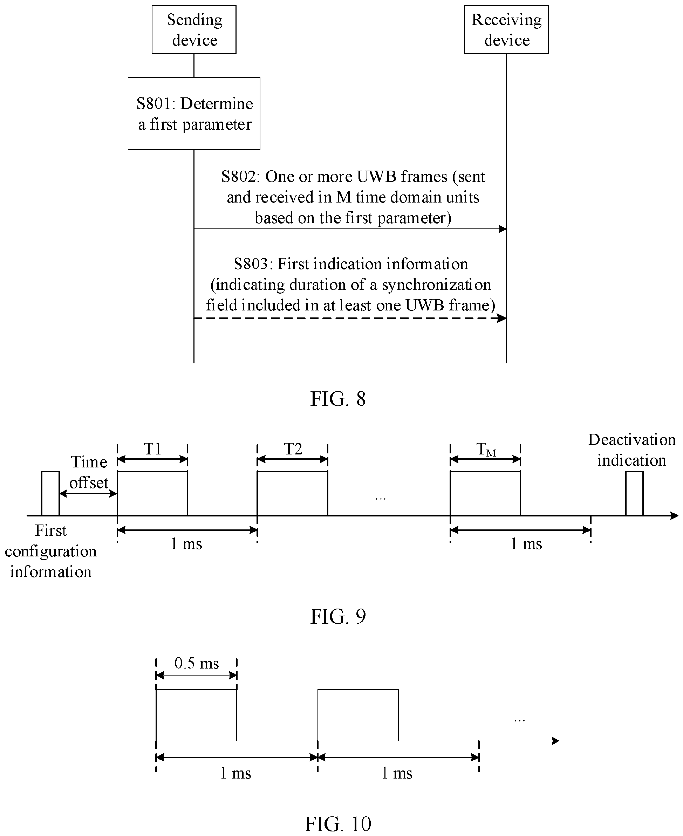

An embodiment of this application provides another communication method below. FIG. 8 is a flowchart of the method.

S801: A sending device determines a first parameter.

The first parameter may include a transmission parameter of the sending device in M time domain units, and M is an integer greater than or equal to 2. For example, duration of each of the M time domain units is less than or equal to first duration, and a time offset between two adjacent time domain units in the M time domain units is greater than or equal to the first duration. For an understanding of the time offset, refer to the embodiment shown in FIG. 4. Optionally, the first duration is, for example, 1 ms.

For example, when the sending device performs transmission in the M time domain units, a same frequency domain resource is used. Alternatively, the embodiment shown in FIG. 8 and the embodiment shown in FIG. 4 may be applied in combination. For example, one of the M time domain units in this embodiment of this application may include P channels (optionally, each of the M time domain units may include P channels), and P is an integer greater than or equal to 2. When the sending device performs transmission on the P channels, different frequency domain resources may be used. This may be considered as that the sending device performs frequency hopping transmission on the P channels. For a specific transmission manner, refer to the embodiment shown in FIG. 4. This may be understood as that the sending device may perform time division transmission in the M time domain units. Compared with that in a current solution in which the sending device performs continuous transmission, transmission duration of the sending device in each time domain unit is shortened by performing transmission in the M time domain units. When a channel bandwidth is still 500 MHz, because transmission duration of the sending device in one time domain unit is shortened, transmit power of the sending device in one of the M time domain units is increased compared with existing transmit power. For example, in a case of a fixed amount of channel energy, if an original continuous time is replaced with the M time domain units, transmit power of the sending device in one of the M time domain units may be increased by $10 * log_{10} M$ dB compared with original transmit power. It may be learned that according to the technical solution in this embodiment of this application, transmit power for a UWB signal can be effectively increased, thereby increasing a coverage area of a UWB device. In addition, according to the technical solution in this embodiment of this application, the channel bandwidth does not need to be increased. Therefore, there is no additional processing complexity caused because the channel bandwidth is increased. In addition, in this embodiment of this application, no frequency hopping needs to be performed, and frequencies of the sending device in the M time domain units may be the same, thereby reducing processing complexity of the sending device.

The sending device may independently set the first parameter. In this case, that a sending device determines a first parameter is setting the first parameter. After setting the first parameter, the sending device may indicate the first parameter to a receiving device. For example, the sending device may send first configuration information to the receiving device. The first configuration information may be used to configure the first parameter. The receiving device can obtain the first parameter based on the first configuration information.

Alternatively, the first parameter may be set by a receiving device. After setting the first parameter, the receiving device may indicate the first parameter to the sending device. For example, the receiving device may send first configuration information to the sending device. The first configuration information may be used to configure the first parameter. In this case, that a sending device determines a first parameter may be specifically that the sending device obtains the first parameter based on the first configuration information.

Optionally, the first configuration information may be included in a UWB frame. For example, the first configuration information may be included in an MHR or a PHR of the UWB frame. Alternatively, the first configuration information may be included in another type of frame, for example, a Bluetooth frame or the like.

Alternatively, the first parameter may be preset, for example, predefined by using a protocol, or may be determined by the sending device and a receiving device through negotiation. A manner of determining the first parameter is not limited in this embodiment of this application.

The first parameter may have a plurality of different implementations. Examples are used below for description.

1. First implementation of the first parameter

The first parameter may include (or indicate) one or more of the following: a first cycle, the duration of each of the M time domain units or a duration ratio of each of the M time domain units to the first duration, a time offset between a frame carrying the first configuration information and a start time domain location of the 1st time domain unit in the M time domain units, valid duration information of the first parameter, or a time range for the receiving device to send acknowledgment information. The acknowledgment information may also be referred to as feedback information or the like, for example, is an acknowledgment (ACK) or a negative acknowledgment (NACK).

Duration of the first cycle may be greater than or equal to the first duration. For example, the first cycle may be understood as a cycle of the time domain units.

The first parameter may include duration of at least one of the M time domain units. For example, if M=3, and duration of the three time domain units is respectively T1, T2, and T3, the first parameter may include T1, T2, and T3. Alternatively, if duration of two of the M time domain units is equal, the first parameter includes duration of one of the time domain units. For example, if M=3, duration of the three time domain units is respectively T1, T2, and T3, and T1=T2, the first parameter may include T1 and T3.

Alternatively, the first parameter may include a duration ratio of at least one of the M time domain units. A duration ratio of a time domain unit is a duration ratio of the time domain unit to the first duration or 1 millisecond. For example, if M=3, duration of the three time domain units is respectively T1, T2, and T3, and the first duration or duration of 1 millisecond is represented by T0, the first parameter may include T1/T0, T2/T0, and T3/T0. Alternatively, if duration ratios of two of the M time domain units to the first duration or 1 millisecond are equal, the first parameter includes a duration ratio of one of the time domain units to the first duration or 1 millisecond. For example, if M=3, duration ratios of the three time domain units to the first duration are respectively T1/T, T2/T, and T3/T, and T1=T2, the first parameter may include T1/T0 and T3/T0.

For the valid duration information of the first parameter, refer to S401 in the embodiment shown in FIG. 4.

The first parameter may indicate the time range for the receiving device to send the acknowledgment information. For example, the first parameter may indicate the time range by indicating an earliest time and a latest time for the receiving device to send the acknowledgment information, the first parameter may indicate the time range by indicating an earliest time and duration for the receiving device to send the acknowledgment information, or the first parameter may indicate the time range by indicating duration and a latest time for the receiving device to send the acknowledgment information. Alternatively, the first parameter may indicate the time range in another manner. For example, the first parameter may indicate one or more time windows, and the one or more time windows are the time range for the receiving device to send the acknowledgment information. For example, the acknowledgment information corresponds to a UWB frame received by the receiving device from the sending device in the M time domain units. For example, the acknowledgment information may indicate that the UWB frame is successfully received or fails to be received.

It should be noted that if the sending device and the receiving device communicate in a half-duplex manner, the M time domain units are used by the sending device to send information to the receiving device. Therefore, the sending device possibly cannot receive information from the receiving device in the M time domain units. Optionally, the one or more time windows may not overlap the M time domain units, so that the acknowledgment information is not sent in the M time domain units. In this case, the sending device can correctly receive the acknowledgment information.

If the sending device sends the first configuration information to the receiving device to configure the first parameter, and the first configuration information is further used to activate the first parameter, that is, the first configuration information is used to configure and activate the first parameter, or the first configuration information is used to configure the first parameter and is not used to activate the first parameter, but "configuration" is considered as "activation", the first parameter may further include the time offset between the frame carrying the first configuration information and the 1$^{st}$ time domain unit in the M time domain units, so that the receiving device can determine a time domain location of the 1$^{st}$ time domain unit in the M time domain units, and then can determine time domain locations of the M time domain units. The 1$^{st}$ time domain unit in the M time domain units is a time domain unit that first arrives in a time sequence in the M time domain units. For an understanding of the time offset between the frame carrying the first configuration information and the 1$^{st}$ time domain unit in the M time domain units, refer to S401 in the embodiment shown in FIG. 4.

FIG. 9 is a diagram of content indicated by the first parameter in the first implementation. In FIG. 9, the first parameter may include a time offset between the frame carrying the first configuration information and the 1$^{st}$ time domain unit in the 1$^{st}$ first cycle, and duration T1 to $T_M$ of the M time domain units.

2. Second implementation of the first parameter

In this implementation, the first parameter may be considered as a parameter in a low energy consumption mode or an energy saving mode, that is, an energy saving mechanism may be introduced. In the energy saving mechanism, the receiving device may wake up only in an active time to perform receiving, and may not perform receiving or enter a sleep state in another time, to reduce power consumption of the device.

The first parameter may include (or indicate) one or more of the following: a first cycle, a second cycle, a time offset between a frame carrying the first configuration information and the 1$^{st}$ first time window in M first time windows (or a time offset between a frame carrying the first configuration information and each of M first time windows), valid duration information of the first parameter, information about some or all of K second time windows in the second cycle, or information about some or all of the first time windows in the first cycle. The M first time windows correspond to the M time domain units. For example, one first time window may include one time domain unit. The 1$^{st}$ first time window in the M first time windows is, for example, a first time window including the 1$^{st}$ time domain unit in the M time domain units. The 1$^{st}$ time domain unit in the M time domain units is a time domain unit that earliest arrives in time in the M time domain units.

Duration of the first cycle is greater than or equal to 1 ms. For example, the duration of the first cycle is greater than or equal to the first duration. Duration of the second cycle is greater than or equal to the duration of the first cycle. Therefore, the first cycle may also be referred to as a short cycle, and the second cycle may also be referred to as a long cycle. The first time window corresponds to one of the M time domain units. Duration of the second time window is second duration. For example, the second duration may be less than or equal to 1 ms. One first time window corresponds to one second time window. For example, there is one second time window before each first time window starts, for example, K is equal to a quantity of first time windows in the second cycle. Alternatively, one first cycle corresponds to one second time window. For example, if there is one second time window before each first cycle starts or when each first cycle starts, a quantity of K may be equal to a quantity of repetition times of the first cycle in the second cycle. Alternatively, one second cycle corresponds to one second time window. For example, if there is one second time window before each second cycle starts or when each second cycle starts, a quantity of K may be equal to 1. K is a positive integer. Optionally, the first time window may also be referred to as an active time window, an on duration window, a time window, a wakeup time window, a transmission time window, or the like, and the second time window may also be referred to as a wakeup time window or the like. A name is not limited.

The first cycle is, for example, a cycle of one time domain unit, is understood as a cycle of the first duration, or is understood as a cycle of the first time window. The second cycle may be determined based on a cycle of a UWB service. For example, the second cycle is equal to the cycle of the UWB service, for example, 20 ms. For example, the second cycle is a cycle of the M time domain units, is understood as a cycle of M pieces of first duration, or is understood as a cycle of the M first time windows.

Information that is about a first time window and that is indicated (or included) by the first parameter may include start time domain location information and duration information of the first time window, include end time domain location information and duration information of the first time window, or include a start time domain location and end time domain location information of the first time window, or the like.

The first parameter may further indicate the information about some or all of the K second time windows. For this, refer to S401 in the embodiment shown in FIG. 4.

The second time window may indicate whether to receive a UWB frame, or indicate to receive a UWB frame. For example, the sending device may send third indication information in some or all of the K second time windows. Correspondingly, the receiving device may receive the third indication information from the sending device in the corresponding second time windows. The third indication information may indicate whether to receive a UWB frame in next one or more first time windows, or indicate whether there is a to-be-transmitted UWB frame in next one or more first time windows. Alternatively, the third indication information may indicate to receive a UWB frame in next one or more first time windows, or indicate that there is a to-be-transmitted UWB frame in next one or more second time windows. For this part of content, refer to S401 in the embodiment shown in FIG. 4.

If the sending device sends the first configuration information to the receiving device to configure the first parameter, and the first configuration information is further used to activate the first parameter, that is, the first configuration information is used to configure and activate the first parameter, or the first configuration information is used to configure the first parameter and is not used to activate the first parameter, but "configuration" is considered as "activation", the first parameter may include the time offset between the frame carrying the first configuration information and the 1$^{st}$ first time window in the M first time windows or a time offset between the frame carrying the first configuration information and the 1$^{st}$ second time window in the K second time windows, so that the receiving device can determine time domain locations of the M first time windows or time domain locations of the K second time windows.

In addition to the foregoing two implementations, the first parameter may be implemented in another manner. This is not specifically limited.

As described above, the first configuration information may be used to configure the first parameter and further used to activate the first parameter, or the first configuration information is used to configure the first parameter and is not used to activate the first parameter, but "configuration" is considered as "activation". In this case, the first configuration information may also be referred to as parameter indication information or the like, and the first configuration information may be dynamically sent. Alternatively, the first configuration information may be used to configure the first parameter and not used to activate the first parameter, and "configuration" is not considered as "activation", that is, activation further needs to be performed after configuration. In this case, the first configuration information may be semi-statically configured. That is, after the first parameter is configured by using the first configuration information, the first parameter may be used for a plurality of times. In addition, in this case, the sending device may further send an activation indication, to activate the first parameter. For this part of content, refer to S401 in the embodiment shown in FIG. 4.

In the first implementation of the first parameter, the first parameter may include (or indicate) the time offset between the frame carrying the first configuration information and the 1$^{st}$ time domain unit (or each time domain unit) in the M time domain units. In the second implementation of the first parameter, the first parameter may include (or indicate) the time offset between the frame carrying the first configuration information and the 1$^{st}$ (or each) first time window in the M first time windows. In this case, if the sending device needs to send both the first configuration information and the activation indication, information (for example, several types of information listed in this paragraph) that is related to the first configuration information and that is included in the first parameter may be replaced with information related to the activation indication. In addition, the information related to the activation indication may not be included in the first configuration information, but is included in the activation indication. This is equivalent to that the first parameter may be separately carried in the first configuration information and the activation indication.

For example, in the first implementation of the first parameter, the first parameter may include (or indicate) a time offset between a frame carrying the activation indication and the 1$^{st}$ time domain unit (or each time domain unit) in the M time domain units, and the time offset may be included in the activation indication. In the first implementation of the first parameter, the first parameter may include (or indicate) a time offset between a frame carrying the activation indication and the 1$^{st}$ (or each) first time window in the M first time windows, and the time offset may be included in the activation indication. Optionally, the frame carrying the activation indication is, for example, a UWB frame, or may be another type of frame, for example, a Bluetooth frame or the like.

Optionally, regardless of whether the sending device sends the first configuration information and does not send the activation indication, or sends both the first configuration information and the activation indication, when there is no need to continue to use the first parameter, the sending device may send a deactivation indication, to deactivate the first parameter. For example, the deactivation indication may be sent after a last first cycle (or last first duration) ends. After sending the deactivation indication, the sending device no longer uses the first parameter. After receiving the deactivation indication, the receiving device no longer uses the first parameter. Still with reference to FIG. 9, the deactivation indication is shown. Optionally, the deactivation indication may be included in a UWB frame, for example, may be included in an MHR or a PHR of the UWB frame.

Alternatively, if the first parameter includes the valid duration information of the first parameter, both the sending device and the receiving device can determine a use time of the first parameter based on the valid duration information, and the sending device may not need to send the deactivation indication.

S802: The sending device sequentially sends one or more UWB frames to the receiving device in the M time domain units based on the first parameter. Correspondingly, the receiving device sequentially receives the one or more UWB frames from the sending device in the M time domain units based on the first parameter. At least one UWB frame may be transmitted in one time domain unit.

Maximum transmit power of the sending device in a first time domain unit in the M time domain units may be determined based on duration of the first time domain unit. The first time domain unit is, for example, any one of the M time domain units. For content such as a manner of calculating the maximum transmit power, refer to S404 in the embodiment shown in FIG. 4. When the formula 1 is used, BW may represent a bandwidth of the sending device in the first time domain unit, and T represents the duration of the first time domain unit.

If the first parameter uses the second implementation described in S801, in this embodiment of this application, an example in which the third indication information indicates to receive a UWB frame in next one or more first time windows is used. If the third indication information indicates not to receive a UWB frame in next one or more first time windows, S802 may not be performed.

In addition, if the first parameter uses the second implementation, optionally, the sending device may use some or all of the one or more sent UWB frames to carry second indication information, to indicate whether there is a to-be-transmitted UWB frame, indicate whether to continue to receive a UWB frame, indicate whether subsequently there is a UWB frame, or indicate whether there is a next UWB frame. For example, the one or more UWB frames include a first UWB frame, and the first UWB frame may include the second indication information. After receiving the first UWB frame, the receiving device may determine, based on the second indication information, whether there is a to-be-transmitted UWB frame. Optionally, the second indication information may be carried in an MHR or a PHR of the first UWB frame. For example, the second indication information may occupy 1 bit. If a value of the bit is "1", it indicates that there is a to-be-transmitted UWB frame; or if a value of the bit is "0", it indicates that there is no to-be-transmitted UWB frame.

The first UWB frame is, for example, a frame transmitted in any one of M first time windows included in a second cycle, and may be the 1st UWB frame transmitted in the first time window, a middle UWB frame transmitted in the first time window, or a last UWB frame transmitted in the first time window. If the first UWB frame is a last frame transmitted in any first time window other than a last first time window in M first time windows in a second cycle, and if the second indication information indicates that there is a to-be-transmitted UWB frame, the receiving device continues to receive a UWB frame in a next first time window of the first time window. Between the two first time windows, the receiving device may enter a state of not receiving (or detecting) a UWB signal or enter the sleep state. If the first UWB frame is a last frame transmitted in a last first time window in M first time windows in a second cycle, and if the second indication information indicates that there is a to-be-transmitted UWB frame, the receiving device may continue to receive a UWB frame, and temporarily does not enter a state of not receiving a UWB signal or the sleep state.

Optionally, if the first UWB frame is a last frame transmitted in a last first time window in M first time windows in a second cycle, and if the second indication information indicates that there is a to-be-transmitted UWB frame, the receiving device may start a first timer, to continue to receive a UWB frame. Timing duration of the first timer may be configured by the sending device or the receiving device, determined by the sending device and the receiving device through negotiation, or preset, for example, predefined by using a protocol or the like. For example, the timing duration of the first timer may be less than or equal to a time interval between an end time domain location of a last first time window in a second cycle and an end time domain location of the second cycle. During running of the first timer, the receiving device may enter a state of not receiving (or detecting) a UWB signal or enter the sleep state.

Alternatively, if the second indication information indicates that there is no to-be-transmitted UWB frame, regardless of the fact that the first UWB frame is a UWB frame transmitted in a specific first time window in the M first time windows, and regardless of whether there is still a second cycle after a current second cycle, the receiving device may enter a state of not receiving (or not detecting) a UWB frame or enter the sleep state until the current second cycle ends. This is equivalent to that the second indication information may deactivate the next one or more first time windows.

For example, FIG. 10 is a diagram of the M time domain units according to an embodiment of this application. In FIG. 10, an example in which M=2, the duration of each time domain unit is 0.5 ms, and the first duration is 1 ms is used. In FIG. 10, the sending device distributes a UWB frame in two 1-ms periods for transmission, and a transmission time (that is, duration of one time domain unit) in each 1-ms period is 0.5 ms. Based on the formula 1, if the channel bandwidth is 500 MHz, maximum transmit power of the sending device in each time domain unit may be -11.3 dBm. However, if the sending device performs transmission in a continuous 2-ms period, maximum transmit power of the sending device is -14.3 dBm. It may be learned that compared with the continuous transmission solution, the solution in this embodiment of this application can effectively increase the transmit power.

Optionally, this embodiment of this application may further include S803: The sending device sends first indication information to the receiving device. Correspondingly, the receiving device receives the first indication information from the sending device. The first indication information may indicate duration information of a synchronization field included in at least one of the one or more UWB frames. For example, the UWB frame may include an SHR, and the SHR may include the synchronization field. The synchronization field is, for example, represented as SYNC. The synchronization field may include a pilot symbol. The receiving device may complete one or more of ranging, synchronization, or channel estimation by detecting the pilot symbol. S803 may be performed before S802, may be performed after S802, or may be simultaneously performed with S802.

For example, if a quantity of the one or more UWB frames is greater than 1, in the one or more UWB frames, duration of synchronization fields included in at least two UWB frames may be different, or quantities of repetition times of pilot symbols may be different. For example, duration of a synchronization field included in the 1st UWB frame (which may be a UWB frame first sent by the sending device in the one or more UWB frames or a UWB frame first generated by the sending device in the one or more UWB frames) in the one or more UWB frames may be long, and the receiving device may perform accurate processing based on the synchronization field, for example, perform accurate ranging, synchronization, channel estimation, or the like. Duration of a synchronization field included in a UWB frame other than the 1st UWB frame in the one or more UWB frames may be short. In a sending time of the another UWB frame, it may be considered that a synchronization error is small, or it may be considered that a channel environment basically remains unchanged, or the like. Therefore, the duration of the synchronization field may be reduced, to reduce overheads of the synchronization field.

For another example, in the M time domain units, there may be a corresponding association relationship between different time domain units. For example, an association relationship is represented as that every H of the M time domain units have an association relationship. In this case, duration of a synchronization field included in each of some or all UWB frames sent by the sending device in the 1st time domain unit in every H time domain units may be long, and the receiving device may perform accurate processing based on the synchronization field, for example, perform accurate ranging, synchronization, channel estimation, or the like. Duration of a synchronization field included in each of some or all UWB frames sent by the sending device in a subsequent time domain unit other than the 1st time domain unit in every H time domain units may be short. In the subsequent time domain unit, it may be considered that a synchronization error is small, or it may be considered that a channel environment basically remains unchanged compared with that in the 1st time domain unit, or the like. Therefore, the duration of the synchronization field may be reduced, to reduce overheads of the synchronization field. H is a positive integer less than or equal to M.

The first indication information may indicate the duration of the synchronization field in different manners. For example, in an indication manner, the first indication information may indicate an index of a pilot symbol included in the synchronization field, and indicate a quantity of repetition times of the pilot symbol included in the synchronization field. For example, if there is a correspondence between an index of a pilot symbol and duration of the pilot symbol, the receiving device can determine duration of the pilot symbol based on the index of the pilot symbol, and then can determine the duration of the synchronization field based on the quantity of repetition times of the pilot symbol. Alternatively, if there is a correspondence between an index of a pilot symbol and both a pilot code used to generate the pilot symbol and a value of L, the receiving device can determine, based on the index of the pilot symbol, a pilot code used to generate the pilot symbol, can determine the value of L, then can determine duration of the pilot symbol, and then can determine the duration of the synchronization field with reference to the quantity of repetition times of the pilot symbol. For another example, in another manner of indicating the duration of the synchronization field, the first indication information may indicate duration of a pilot symbol included in the synchronization field, and indicate a quantity of repetition times of the pilot symbol included in the synchronization field, or indicate a pilot code used to generate the pilot symbol and a value of L, or directly indicate the duration of the synchronization field.

The pilot symbol may be generated by using the pilot code. The pilot code is, for example, a sequence, and a length of the pilot code is, for example, C. The pilot symbol may be generated by inserting L-1 0s between two adjacent elements of the pilot code, that is, a length of the pilot symbol is $L \times C$. Therefore, the duration of the pilot symbol can be determined after the pilot code and L are determined.

Optionally, for the one or more UWB frames, if physical payload sizes are the same, and modulation and coding schemes (modulation and coding schemes, MCSs) are the same, there may be no need to include a PHR in each UWB frame, to reduce overheads of the UWB frame. For example, the first indication information may further indicate one or more of the following information of each of the one or more UWB frames: whether a PHR is included, a physical payload size, or an MCS.

In this embodiment of this application, the sending device may send the UWB frames to the receiving device in the M time domain units. This is equivalent to replacing an original continuous time with a plurality of time domain units. After the plurality of time domain units are used, duration of each time domain unit is reduced compared with an existing continuous time, so that transmit power of the sending device in each time domain unit is increased compared with existing transmit power in the continuous time. For example, in a case of a fixed amount of channel energy, if the original continuous time is replaced with the M time domain units, transmit power of the sending device in one of the M time domain units may be M times original transmit power in the continuous time. It may be learned that according to the technical solution in this embodiment of this application, transmit power for a UWB signal can be effectively increased, thereby increasing a coverage area of a UWB device.

The embodiment shown in FIG. 4 and the embodiment shown in FIG. 8 provide different transmission mechanisms. A transmission mechanism to be used by the sending device may be preset, for example, predefined in a protocol, determined by the sending device and the receiving device through negotiation, or set by the sending device or the receiving device. Setting by the sending device is used as an example. For example, the sending device may determine a transmission mode and a transmission parameter corresponding to the transmission mode based on a channel condition, a communication distance, and/or another factor, and notify the determined transmission mode and parameter to the receiving device. For example, in a case of a good channel condition, there may be a small quantity of channels in a frequency hopping transmission mode or a small quantity of time domain units in time division transmission; and in a case of a poor channel condition, there may be a large quantity of channels in the frequency hopping transmission mode or a large quantity of time domain units in time division transmission. The sending device may determine the channel condition based on a signal (for example, a UWB frame) from the receiving device, or the receiving device may send channel information to the sending device, and the sending device may determine the channel condition based on the channel information. In addition, the transmission mode may be switched. For example, if the frequency hopping transmission mode is selected in a first time period, switching to the time division transmission mode may be performed in a second time period. For example, the sending device or the receiving device may determine, based on the channel condition, the communication distance, and/or another factor, whether to switch the transmission mode. Alternatively, a switching manner may be preset, for example, predefined in a protocol. For example, the protocol specifies that the time division transmission mode is used in the first time period, and the frequency hopping transmission mode is used in the second time period. Alternatively, a switching manner may be determined by the sending device and the receiving device through negotiation or the like.

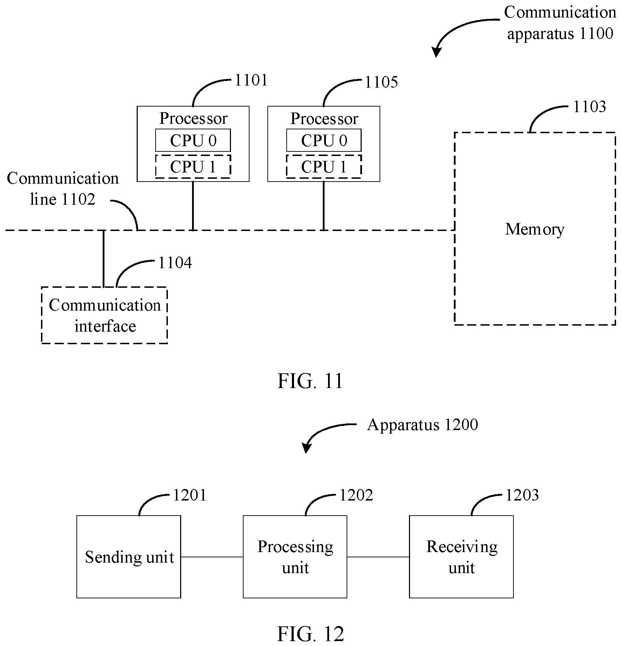

FIG. 11 is a diagram of a structure of a communication apparatus according to an embodiment of this application. The communication apparatus 1100 may be the sending device or a circuit system of the sending device in the embodiment shown in any one of FIG. 4 or FIG. 8, and is configured to implement the method corresponding to the sending device in the foregoing method embodiments. Alternatively, the communication apparatus 1100 may be the receiving device or a circuit system of the receiving device in the embodiment shown in any one of FIG. 4 or FIG. 8, and is configured to implement the method corresponding to the receiving device in the foregoing method embodiments. For a specific function, refer to the descriptions in the foregoing method embodiments. For example, a circuit system is a chip system.

The communication apparatus 1100 includes at least one processor 1101. The processor 1101 may be configured for internal processing of the apparatus to implement a specific control processing function. Optionally, the processor 1101 includes instructions. Optionally, the processor 1101 may store data. Optionally, different processors may be independent components, may be located at different physical locations, and may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. The memory 1103, the communication line 1102, and the communication interface 1104 are all optional, and therefore are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1100 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1101 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1102 may include a channel for transferring information between the foregoing components.

The communication interface 1104 is any apparatus such as a transceiver, and is configured to communicate with another device or a communication network, for example, an Ethernet network, a radio access network (radio access network, RAN), a wireless local area network (wireless local area network, WLAN), a wired access network, or the like.

The memory 1103 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in an instruction or data structure form and that can be accessed by a computer. However, this is not limited thereto. The memory 1103 may exist independently, and is connected to the processor 1101 through the communication line 1102. Alternatively, the memory 1103 may be integrated with the processor 1101.

The memory 1103 is configured to store computer-executable instructions for executing the solutions of this application, and the processor 1101 controls the execution. The processor 1101 is configured to execute the computer-executable instructions stored in the memory 1103, to implement the steps performed by the sending device in the embodiment shown in any one of FIG. 4 or FIG. 8, or implement the steps performed by the receiving device in the embodiment shown in any one of FIG. 4 or FIG. 8.

Optionally, the computer-executable instructions in this embodiment of this application may also be referred to as application program code. This is not specifically limited in this embodiment of this application.

In specific implementation, in an embodiment, the processor 1101 may include one or more CPUs, for example, a CPU 0 and a CPU 1 in FIG. 11.

In specific implementation, in an embodiment, the communication apparatus 1100 may include a plurality of processors, for example, the processor 1101 and a processor 1105 in FIG. 11. Each of these processors may be a single-core (single-CPU) processor or a multi-core (multi-CPU) processor. The processor herein may be one or more devices, circuits, and/or processing cores configured to process data (for example, computer program instructions).

When the apparatus shown in FIG. 11 is a chip, for example, a chip of a sending device or a chip of a receiving device, the chip includes the processor 1101 (and may further include the processor 1105), the communication line 1102, the memory 1103, and the communication interface 1104. Specifically, the communication interface 1104 may be an input interface, a pin, a circuit, or the like. The memory 1103 may be a register, a cache, or the like. The processor 1101 and the processor 1105 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used. For example, when each functional module is obtained through division based on each corresponding function, FIG. 12 is a diagram of an apparatus. The apparatus 1200 may be the sending device or the receiving device in the foregoing method embodiments, or a chip in the sending device or a chip in the receiving device. The apparatus 1200 includes a sending unit 1201, a processing unit 1202, and a receiving unit 1203.

It should be understood that the apparatus 1200 may be configured to implement the steps performed by the sending device or the receiving device in the communication method in embodiments of this application. For related features, refer to the embodiment shown in any one of FIG. 4 or FIG. 8. Details are not described herein.

Optionally, functions/implementation processes of the sending unit 1201, the receiving unit 1203, and the processing unit 1202 in FIG. 12 may be implemented by the processor 1101 in FIG. 11 by invoking the computer-executable instructions stored in the memory 1103. Alternatively, a function/an implementation process of the processing unit 1202 in FIG. 12 may be implemented by the processor 1101 in FIG. 11 by invoking the computer-executable instructions stored in the memory 1103, and functions/implementation processes of the sending unit 1201 and the receiving unit 1203 in FIG. 12 may be implemented by the communication interface 1104 in FIG. 11.

Optionally, when the apparatus 1200 is a chip or a circuit, functions/implementation processes of the sending unit 1201 and the receiving unit 1203 may alternatively be implemented by a pin, a circuit, or the like.

This application further provides a computer-readable storage medium. The computer-readable storage medium stores a computer program or instructions. When the computer program or the instructions are run, the method performed by the sending device or the receiving device in the foregoing method embodiments is implemented. In this way, the functions in the foregoing embodiments may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the sending device or the receiving device in any one of the foregoing method embodiments.

An embodiment of this application further provides a processing apparatus, including a processor and an interface. The processor is configured to perform the method performed by the sending device or the receiving device in any one of the foregoing method embodiments.

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer can be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, into which one or more usable media are integrated. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The various example logic units and circuits described in embodiments of this application may implement or operate the described functions through a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, or a discrete hardware part. The general-purpose processor may be a microprocessor. Optionally, the general-purpose processor may also be any conventional processor, controller, microcontroller, or state machine. The processor may alternatively be implemented by a combination of computing apparatuses, for example, a digital signal processor and a microprocessor, a plurality of microprocessors, one or more microprocessors and a digital signal processor core, or any other similar configuration.

The steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information into the storage medium. Optionally, the storage medium may alternatively be integrated into a processor. The processor and the storage medium may be disposed in an ASIC, and the ASIC may be disposed in a terminal device. Alternatively, the processor and the storage medium may be disposed in different parts of a terminal device.

Alternatively, these computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or there is a logical conflict, terms and/or descriptions in different embodiments are consistent and may be referenced to each other. Technical features in different embodiments may be combined based on an internal logical relationship of the technical features, to form a new embodiment.

It may be understood that in embodiments of this application, the sending device and/or the receiving device may perform some or all steps in embodiments of this application. These steps or operations are merely examples. In embodiments of this application, other operations or variations of various operations may be further performed. In addition, the steps may be performed in a sequence different from that presented in embodiments of this application, and it is possible that not all operations in embodiments of this application need to be performed.

**Claims**

1. A communication method, applied to a sending device, wherein the method comprises:

   determining a first parameter; and

sequentially sending one or more ultra-wideband UWB frames to a receiving device on M channels in first duration based on the first parameter, wherein the first parameter is a transmission parameter of the sending device on the M channels, M is an integer greater than or equal to 2, and the first duration is less than or equal to 1 millisecond.

2. The method according to claim 1, wherein before the sending one or more UWB frames, the method further comprises:
sending first configuration information to the receiving device, wherein the first configuration information is used to configure the first parameter.

3. The method according to claim 2, wherein the first configuration information is comprised in a physical header PHR or a media access control header MHR of a UWB frame used to carry the first configuration information.

4. The method according to any one of claims 1 to 3, wherein the first parameter comprises one or more of the following: a first cycle, an arrangement sequence of or a frequency hopping pattern followed by the M channels in the first duration, duration of each of the M channels in the first duration or a duration ratio of each of the M channels to the first duration, a time interval between two channels with adjacent transmission times in the M channels, or a time offset between a frame carrying the first configuration information and the 1st channel in the M channels, wherein duration of the first cycle is greater than or equal to the first duration.

5. The method according to any one of claims 1 to 3, wherein the first parameter comprises one or more of the following: duration of each of the M channels in the first duration or a duration ratio of each of the M channels to the first duration, a time offset between a frame carrying the first configuration information and each of the M channels, or valid duration information of the first parameter.

6. The method according to any one of claims 1 to 3, wherein the first parameter comprises one or more of the following: a first cycle, a second cycle, information about N first time windows in the first cycle, or information about K second time windows in the second cycle, wherein duration of the first cycle is greater than or equal to the first duration, duration of the second cycle is greater than or equal to the duration of the first cycle, the N first time windows correspond to the M channels, N is a positive integer less than or equal to M, and K is an integer greater than or equal to 1.

7. The method according to claim 6, wherein information about one of the N first time windows comprises a start time domain location and/or duration information of the first time window.

8. The method according to claim 6 or 7, wherein information about one of the K second time windows comprises one or more of the following: start time domain location information of the second time window, duration information of the second time window, or a time offset between a nearest first time window and a start time domain location and/or an end time domain location of the second time window.

9. The method according to any one of claims 6 to 8, wherein the one or more UWB frames comprise a first UWB frame, the first UWB frame further comprises second indication information, and the second indication information indicates whether there is still a to-be-transmitted UWB frame.

10. The method according to any one of claims 6 to 9, wherein
third indication information is sent in the second time window, wherein the third indication information indicates the receiving device whether to receive a UWB frame in next one or more first time windows, or the third indication information indicates the receiving device to receive a UWB frame in next one or more first time windows.

11. The method according to any one of claims 1 to 10, wherein maximum transmit power of the sending device on a first channel in the M channels is determined based on duration of the first channel in the first duration, and the first channel is any one of the M channels.

12. The method according to claim 11, wherein an average power spectral density corresponding to the maximum transmit power in 1 millisecond is less than or equal to a first threshold, the first threshold is an upper limit of an average power spectral density, in 1 millisecond, of a channel carrying the UWB frame, and the maximum transmit power meets the following relationship:

$$A + 10 * log_{10}(BW/1MHz) + 10 * log_{10}(1ms/\text{T}),$$

wherein *A* represents the first threshold, *T* represents the duration of the first channel, and *BW* represents a bandwidth of the first channel.

13. The method according to any one of claims 1 to 12, wherein any one of the one or more UWB frames is sent only on one of the M channels.

14. A communication method, applied to a receiving device, wherein the method comprises:

   determining a first parameter; and
   sequentially receiving one or more UWB frames from a sending device on the M channels in first duration based on the first parameter, wherein the first parameter is a transmission parameter of the sending device on the M channels, M is an integer greater than or equal to 2, and the first duration is less than or equal to 1 millisecond.

15. The method according to claim 14, wherein before the receiving one or more UWB frames, the method further comprises:
   receiving first configuration information from the sending device, wherein the first configuration information is used to configure the first parameter.

16. The method according to claim 15, wherein the first configuration information is comprised in a PHR or an MHR of a UWB frame used to carry the first configuration information.

17. The method according to any one of claims 14 to 16, wherein the first parameter comprises one or more of the following: a first cycle, an arrangement sequence of or a frequency hopping pattern followed by the M channels in the first duration, duration of each of the M channels in the first duration or a duration ratio of each of the M channels to the first duration, a time interval between two channels with adjacent transmission times in the M channels, or a time offset between a frame carrying the first configuration information and the 1st channel in the M channels, wherein duration of the first cycle is greater than or equal to the first duration.

18. The method according to any one of claims 14 to 16, wherein the first parameter comprises one or more of the following: duration of each of the M channels in the first duration or a duration ratio of each of the M channels to the first duration, a time offset between a frame carrying the first configuration information and each of the M channels, or valid duration information of the first parameter.

19. The method according to any one of claims 14 to 16, wherein the first parameter comprises one or more of the following: a first cycle, a second cycle, information about N first time windows in the first cycle, or information about K second time windows in the second cycle, wherein duration of the first cycle is greater than or equal to the first duration, duration of the second cycle is greater than or equal to the duration of the first cycle, the N first time windows correspond to the M channels, N is a positive integer less than or equal to M, and K is an integer greater than or equal to 1.

20. The method according to claim 19, wherein the one or more UWB frames comprise a first UWB frame, the first UWB frame further comprises second indication information, and the second indication information indicates whether there is still a to-be-transmitted UWB frame.

21. The method according to claim 19 or 20, wherein
   third indication information is detected in the second time window, wherein the third indication information indicates whether the receiving device needs to receive a UWB frame in next one or more first time windows, or the third indication information indicates the receiving device to receive a UWB frame in next one or more first time windows.

22. The method according to any one of claims 19 to 21, wherein the method further comprises:

   if the second indication information indicates that there is no to-be-transmitted UWB frame, entering a sleep state or no longer receiving a UWB frame in the second cycle; or
   if the second indication information indicates that there is still a to-be-transmitted UWB frame, and the first UWB frame is a last UWB frame in a last first time window in the M first time windows, starting a first timer, to receive a UWB frame in the 1st first time window in a next first cycle, wherein no UWB frame from the sending device is received during running of the first timer.

23. The method according to any one of claims 14 to 22, wherein any one of the one or more UWB frames is received only on one of the M channels.

24. A communication method, applied to a sending device, wherein the method comprises:

determining a first parameter;
sending a plurality of UWB frames to a receiving device in M time domain units based on the first parameter, wherein the first parameter is a transmission parameter of the sending device in the M time domain units, duration of each of the M time domain units is less than or equal to first duration, M is an integer greater than or equal to 2, and the first duration is less than or equal to 1 millisecond; and
sending first indication information to the receiving device, wherein the first indication information indicates duration information of a synchronization field comprised in each of the plurality of UWB frames, and duration information of the synchronization fields comprised in at least two of the plurality of UWB frames is different.

25. The method according to claim 24, wherein before the sending a plurality of UWB frames, the method further comprises:
sending first configuration information to the receiving device, wherein the first configuration information is used to configure the first parameter.

26. The method according to claim 24 or 25, wherein the first parameter comprises one or more of the following: the duration of each of the M time domain units or a duration ratio of each of the M time domain units to the first duration, a time offset between a frame carrying the first configuration information and a start time domain location of the $1^{st}$ time domain unit in the M time domain units, valid duration information of the first parameter, or a time range for the receiving device to send acknowledgment information.

27. A communication method, applied to a receiving device, wherein the method comprises:

determining a first parameter;
receiving a plurality of UWB frames from a sending device in M time domain units based on the first parameter, wherein the first parameter is a transmission parameter of the sending device in the M time domain units, duration of each of the M time domain units is less than or equal to first duration, M is an integer greater than or equal to 2, and the first duration is less than or equal to 1 millisecond; and
receiving first indication information from the sending device, wherein the first indication information indicates duration information of a synchronization field comprised in each of the plurality of UWB frames, and duration information of the synchronization fields comprised in at least two of the plurality of UWB frames is different.

28. The method according to claim 27, wherein before the receiving a plurality of UWB frames, the method further comprises:
receiving first configuration information from the sending device, wherein the first configuration information is used to configure the first parameter.

29. The method according to claim 27 or 28, wherein the first parameter comprises one or more of the following: the duration of each of the M time domain units or a duration ratio of each of the M time domain units to the first duration, a time offset between a frame carrying the first configuration information and a start time domain location of the $1^{st}$ time domain unit in the M time domain units, valid duration information of the first parameter, or a time range for the receiving device to send acknowledgment information.

30. A communication apparatus, comprising a processor and a memory, wherein the memory is coupled to the processor, and the processor is configured to perform the method according to any one of claims 1 to 13, the method according to any one of claims 14 to 23, the method according to any one of claims 24 to 26, or the method according to any one of claims 27 to 29.

31. A computer-readable storage medium, wherein the computer-readable storage medium is configured to store a computer program, and when the computer program is run on a computer, the computer is enabled to perform the method according to any one of claims 1 to 13, the computer is enabled to perform the method according to any one of claims 14 to 23, the computer is enabled to perform the method according to any one of claims 24 to 26, or the computer is enabled to perform the method according to any one of claims 27 to 29.

**32.** A chip system, wherein the chip system comprises:
a processor and an interface, wherein the processor is configured to invoke instructions from the interface and run the instructions, and when the processor executes the instructions, the method according to any one of claims 1 to 13, the method according to any one of claims 14 to 23, the method according to any one of claims 24 to 26, or the method according to any one of claims 27 to 29 is implemented.

**33.** A computer program product, wherein the computer program product comprises a computer program, and when the computer program is run on a computer, the computer is enabled to perform the method according to any one of claims 1 to 13, the computer is enabled to perform the method according to any one of claims 14 to 23, the computer is enabled to perform the method according to any one of claims 24 to 26, or the computer is enabled to perform the method according to any one of claims 27 to 29.

FIG. 1

FIG. 2

FIG. 3

```
┌──────────┐                                    ┌──────────┐
│ Sending  │                                    │Receiving │
│ device   │                                    │ device   │
└──────────┘                                    └──────────┘
```

S402: First capability information indicating
a capability of the sending device

S403: Second capability information
indicating a capability of the receiving device

S401: Determine
a first parameter

S404: One or more UWB frames (sent
and received on M channels based on
the first parameter)

FIG. 4

T1    T2    T3

| CH | CH | CH |        | CH | CH | CH |
| 8  | 9  | 10 |        | 8  | 9  | 10 |   ...

G1    G2

1 millisecond

20 milliseconds

FIG. 5A

| CH9 |        | CH9 |  ...

1 millisecond

20 milliseconds

FIG. 5B

EP 4 525 529 A1

FIG. 6A

FIG. 6B

FIG. 6C

EP 4 525 529 A1

First
configuration
information

Activation
indication

Time
offset

T1  T2  T3

CH
8

CH
9

CH
10

G1  G2

CH
8

CH
8

CH
10

...

CH
8

CH
8

CH
10

Deactivation
indication

1 millisecond

1 millisecond

FIG. 6D

First
configuration
information

Time
offset

Second cycle

A sending device
indicates that there is a
to-be-transmitted UWB
frame in the second cycle

The sending device
indicates that there is no
to-be-transmitted UWB
frame in the second cycle

...

CH
8

CH
9

First
timer

CH
8

CH
9

CH
8

CH
9

First cycle

Sleep

FIG. 7

EP 4 525 529 A1

Sending
device

Receiving
device

S801: Determine
a first parameter

S802: One or more UWB frames (sent
and received in M time domain units
based on the first parameter)

S803: First indication information
(indicating duration of a synchronization
field included in at least one UWB frame)

FIG. 8

T1          T2          T$_M$     Deactivation
                                  indication

Time
offset

First
configuration
information

1 ms          ...          1 ms

FIG. 9

0.5 ms

...

1 ms          1 ms

FIG. 10

Communication
apparatus 1100

Processor 1101

Processor 1105

Memory 1103

CPU 0

CPU 1

CPU 0

CPU 1

Communication
line 1102

Communication
interface 1104

FIG. 11

Apparatus 1200

Sending unit 1201

Processing
unit 1202

Receiving
unit 1203

FIG. 12

## INTERNATIONAL SEARCH REPORT

International application No.

**PCT/CN2023/098239**

### A. CLASSIFICATION OF SUBJECT MATTER

H04W52/18(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI; CNABS; CNTXT; DWPI; VEN; USTXT; 3GPP: 超宽带, 多个, 信道, 时长, 时间段, 时间偏移, 时间窗, 跳频, UWB, offset, time, channel

### C. DOCUMENTS CONSIDERED TO BE RELEVANT

| Category* | Citation of document, with indication, where appropriate, of the relevant passages | Relevant to claim No. |
|---|---|---|
| X | CN 101558574 A (QUALCOMM INC.) 14 October 2009 (2009-10-14)<br>description, page 4, line 5 to page 19, line 21, and figures 1-10 | 1-33 |
| X | CN 101536332 A (QUALCOMM INC.) 16 September 2009 (2009-09-16)<br>description, page 6, line 1 to page 19, line 7, and figures 1-19 | 1-33 |
| A | JP 2005051466 A (MATSUSHITA ELECTRIC INDUSTRIAL CO., LTD.) 24 February 2005<br>(2005-02-24)<br>entire document | 1-33 |
| A | CN 103944671 A (CHINA UNIVERSITY OF GEOSCIENCES (WUHAN)) 23 July 2014<br>(2014-07-23)<br>entire document | 1-33 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 August 2023** | **14 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/098239**

| Patent document cited in search report | | | Publication date (day/month/year) | Patent family member(s) | | | Publication date (day/month/year) |
|---|---|---|---|---|---|---|---|
| CN | 101558574 | A | 14 October 2009 | None | | | |
| CN | 101536332 | A | 16 September 2009 | CN | 101536332 | B | 24 April 2013 |
| JP | 2005051466 | A | 24 February 2005 | JP | 4265332 | B2 | 20 May 2009 |
| CN | 103944671 | A | 23 July 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210653604

- CN 202210926270X